# EUROPÄISCHE PATENTANMELDUNG

(11) **EP 4 789 865 A1**
(43) Veröffentlichungstag der Anmeldung: **12.08.2026**
(21) Anmeldenummer: 25157206.1
(22) Anmeldetag: 11.02.2025
(51) Int. Cl.: B32B 7/12, B32B 27/08, B32B 27/16, B32B 27/32, C08G 18/12, C09J 175/06

(54) **VERFAHREN ZUR HERSTELLUNG EINES RECYCLEFÄHIGEN MONOMATERIAL-MEHRSCHICHTSYSTEMS UND EINSATZ VON POLYESTERPOLYOLEN**

(71) Anmelder: Covestro Deutschland AG, 51373 Leverkusen (DE)
(72) Erfinder: Fait, Thomas, 51063 Köln (DE); Thiebes, Christoph, 51061 Köln (DE)
(74) Vertreter: Levpat

(57) **Zusammenfassung**

Die Erfindung betrifft ein Verfahren zur Herstellung eines Monomaterial-Mehrschichtsystems, insbesondere eines recyclefähigen Monomaterial-Mehrschichtsystems, wobei das Verfahren die folgenden Schritte umfasst oder daraus besteht:
I) Bereitstellen von wenigstens zwei Monomaterial-Schichten;
II) Auftragen eines Zweikomponentenklebstoffs mittelbar oder unmittelbar auf wenigstens eine der beiden bereitgestellten Monomaterial-Schichten, wobei der Zweikomponentenklebstoff mindestens eine isocyanatreaktive-Komponente sowie mindestens eine Isocyanat-Komponente umfasst;
III) Verbinden der Monomaterial-Schichten mittels des Zweikomponentenklebstoffs sowie Aushärten des Zweikomponentenklebstoffs unter Erhalt des Monomaterial-Mehrschichtsystems;
das Material der Monomaterial-Schichten Polyolefine umfasst und der Anteil des Polyolefins von 80,0 bis 99,3 Gew.-% beträgt, bezogen auf das Gesamtgewicht des Monomaterial-Mehrschichtsystems, der Anteil des Zweikomponentenklebstoffs 0,7 bis 20,0 Gew.-% beträgt, bezogen auf das Gesamtgewicht des Monomaterial-Mehrschichtsystems, die isocyanatreaktive-Komponente ein Polyesterpolyol mit einer Hydroxyzahl (OHZ) von ≤ 30 mgKOH/g aufweist, wobei die isocyanatreaktive-Komponente Urethangruppen in einem Bereich von 0 bis 4 Gew.-%, bezogen auf das Gesamtgewicht des nicht-flüchtigen Anteils der isocyanatreaktiven-Komponenten aufweist. Darüber hinaus betrifft die Erfindung ein Monomaterial-Mehrschichtsystem hergestellt nach dem erfindungsgemäßen Verfahren, dessen Verwendung als recyclierfähigen Verpackungsmaterial, sowie ein Verfahren zur Gewinnung eines Rezyklats aus erfindungsgemäßem Monomaterial-Mehrschichtsystemhaltigem Abfall und Formteile daraus.

## Beschreibung

Die vorliegende Erfindung betrifft ein Verfahren zur Herstellung eines Monomaterial-Mehrschichtsystems, insbesondere eines recyclefähigen Monomaterial-Mehrschichtsystems, das durch dieses Verfahren erhaltene oder erhältliche Monomaterial-Mehrschichtsystem sowie die Verwendung des Monomaterial-Mehrschichtsystems. Darüber hinaus betrifft die Erfindung die Verwendung eines Zweikomponentenklebstoffs in Monomaterial-Mehrschichtsystemen, insbesondere zur Verbesserung von deren Recyclingfähigkeit. Schließlich betrifft die Erfindung ein Verfahren zur Gewinnung eines Rezyklats aus Monomaterial-Mehrschichtsystem-haltigem Abfall, welcher ein erfindungsgemäßes Monomaterial-Mehrschichtsystem enthält, sowie ein Formteil, welches durch die Verarbeitung eines gemäß dem vorgenannten Recyclingverfahren erhaltenen oder erhältlichen Rezyklats erhalten oder erhältlich ist.

### Stand der Technik

Zur Verpackung von Industrie- und Konsumgütern werden häufig Verpackungen eingesetzt, die aus Folienverbünden (Mehrschichtsysteme) hergestellt werden, welche aus Folienlagen mit unterschiedlichen Eigenschaften bestehen. Solche Folienverbünde können beispielsweise durch Laminieren mit einem Klebstoff oder durch Extrusion, ggf. unter Einsatz einer Zwischenlage als Haftschicht (Tie-Layer) hergestellt werden. Beispielsweise enthalten solche mehrlagigen Folienverbünde Polyolefin- und Polyester- und Aluminiumfolienlagen. Die für die Verwendung als Verpackungsmaterial notwendigen Eigenschaften wie mechanische Festigkeit, Siegelfähigkeit und Barrierewirkung lassen sich durch die Kombination verschiedener Materialien mit ganz spezifischen Eigenschaften generieren. Leider lassen sich diese Verbundmaterialien aufgrund der verschiedenen Materialien mit unterschiedlichen Materialeigenschaften nicht im Sinne eines mechanischen Recyclings zu hochwertigen Rezyklaten verarbeiten. Das Recycling stellt jedoch eine interessante Möglichkeit dar, um Ressourcen zu schonen und die Umweltbelastung zu verringern. Immer mehr Unternehmen sind oft aus den vorgenannten Gründen sowie aus Kostengründen und regulatorischen Anforderungen bestrebt, ihre Emissionen zu reduzieren, weshalb auch dort Recyclingkonzepte wünschenswert sind. In der Industrie wird daher nach Wegen gesucht, um die Qualität der durch das mechanische Recycling von Verpackungen erzeugten Rezyklate zu erhöhen, damit diese in immer höheren Anteilen bei der Herstellung von Folien eingesetzt werden können.

In der letzten Zeit wurden sogenannte Monomaterial-Verpackungen bestehend aus Monomaterial-Schichtsystemen vorgestellt, die sich nach Gebrauch besonders gut für ein mechanisches Recycling eignen. Diese werden in der Regel hergestellt durch Extrusionslaminieren oder durch Laminieren von zwei Polyolefinfolienlagen mit einem Klebstoff, insbesondere durch Laminieren mit einem Zweikomponenten(2K)-Polyurethanklebstoff. Letzteres bietet den Vorteil, dass eine größere Bandbreite von Materialien eingesetzt werden kann, z.B. auch vorbeschichtete Folienlagen. Bei den sogenannten Monomaterialverpackungen werden ebenfalls Folienlagen mit verschiedenen Eigenschaften miteinander kombiniert, die jedoch größtenteils aus Materialien der gleichen Materialklasse, wie beispielsweise der Polyolefine bestehen. Die unterschiedlichen Eigenschaften der jeweiligen Folienlage können erreicht werden durch die Wahl unterschiedlicher Basispolymere, Zuschlagsstoffe, Vorbehandlung, insbesondere Beschichtung.

Es zeigt sich jedoch, dass sich die beim mechanischen Recycling von solchen Verpackungen bestehend aus Monomaterial-Schichtsystemen erhaltenen Rezyklate nicht oder nur bedingt zur Herstellung von qualitativ hochwertigen Folien oder anderen Formteilen eignen und wenn überhaupt nur in untergeordneter Menge beim Herstellprozess von neuen (nicht-recyclierten) Polyolefinfolien aus sogenannten Virgin-Materialien zugesetzt werden können. Ein Problem besteht oft darin, dass die unter Einsatz von Rezyklat hergestellten neuen Folien optische Mängel und/oder im Vergleich zu aus "Virgin" Materialien hergestellten Folien schlechterer mechanische Eigenschaften (z.B. Reißdehnung, Modul) aufweisen, was auf die üblicherweise beim Laminieren von Folien verwendeten 2K-Polyurethanklebstoffe zurückgeführt wird, die in ausgehärteter Form mit Polyolefinen unverträglich sind und deren Verwendung zunehmend kritisch gesehen wird. Die Verwendung solcher Klebstoffe wird daher im Rahmen von Produktspezifikationen für recyclinggerechte Verpackungen auf geringe Gewichtsanteile beschränkt und es wird nach Alternativen gesucht.

CN 110861380 A beschreibt eine recyclingfähige Verpackung bei der ein Polyurethanklebstoff mit Barriere-Eigenschaften eingesetzt wird. Der Gehalt an nicht näher beschriebenem lösemittelfreiem Polyurethan-Klebstoff im Verbund wird hierbei auf unter 1% begrenzt. Ein Einfluss des Klebstoffes auf die Qualität der gewonnenen Rezyklate wird nicht erwähnt. Ein Einsatz von Klebstoff-Rohstoffen basierend auf nachwachsenden Rohstoffen wird nicht beschrieben.

WO 2019/209337 A1 beschreibt mehrlagige Verbundfolien die eine erhöhte Recyclingfähigkeit aufweisen und unter Verwendung von Polylactiden als Zwischenlage hergestellt werden. Polylactide lassen sich auf Basis von nachwachsenden Rohstoffen herstellen. Der Einsatz von Polyolefinen als Folienlage wird nicht explizit beschrieben.

WO 2021/069668 A1 beschreibt eine recyclingfähige Verpackung auf Polyethylenbasis, es wird eine mögliche Verwendung von lösemittelfreien oder lösemittelhaltigen Klebstoffen auf Polyurethanbasis erwähnt, ohne dass auf die genaue Zusammensetzung des Klebstoffes eingegangen würde. Es wird nicht auf den Einfluss des Klebstoffes auf die Rezyklatqualität eingegangen.

WO 2019/027527 A1 beschreibt eine recyclingfähige Verpackung auf Polyethylenbasis bei der ein lösemittelhaltiger Polyurethanklebstoff mit Barriere-Eigenschaften eingesetzt wird. Es wird nicht auf den Einfluss des Klebstoffes auf die Rezyklatqualität eingegangen.

### Aufgabe der Erfindung

Die Aufgabe der vorliegenden Erfindung bestand demnach darin mindestens einen Nachteil des Standes der Technik zumindest zum Teil zu minimieren. Insbesondere bestand eine Aufgabe in der Bereitstellung eines Verfahrens zur Herstellung eines Monomaterial-Mehrschichtsystems, welches recyclefähig ist und nach dem Recyceln zu einem Rezyklat mit einer guten Qualität, insbesondere mit einer guten Homogenität führt. Des Weiteren sollten im Besonderen Klebstoffe für die Herstellung der Monomaterial-Mehrschichtsysteme zum Einsatz kommen, die gegebenenfalls zu einer guten Verbundfestigkeit der Monomaterial-Mehrschichtsysteme führen und bevorzugt diese Verbundfestigkeit über einen möglichst langen Zeitraum beibehalten, sowie einem Verfahren zur Gewinnung eines solchen Rezyklats.

### Lösung der Aufgabe und detaillierte Beschreibung

Mindestens eine Aufgabe wurde gelöst durch ein Verfahren gemäß Anspruch 1, einem Mehrschichtsystem gemäß Anspruch 12, einer Verwendung des Mehrschichtsystems nach Anspruch 13 oder einem Verfahren zur Gewinnung eines Rezyklats aus dem Mehrschichtsystems nach Anspruch 12 sowie einem Formteil nach Anspruch 16.

Im Zuge der Entwicklungsarbeiten die zu der vorliegenden Erfindung geführt haben, wurde überraschenderweise festgestellt, dass der Einsatz eines spezifischen Zweikomponentenklebstoffs bei der Herstellung eines Monomaterial-Mehrschichtsystems, welches hauptsächlich Polyolefine umfasst, insbesondere 80,0 bis 99,30 Gew.-%, bezogen auf das Gesamtgewicht des Monomaterial-Mehrschichtsystems, zu recyclefähigen Monomaterial-Mehrschichtsystemen führt, die insbesondere eine hohe Verbundfestigkeit aufweisen. Beim Recyceln dieser Monomaterial-Mehrschichtsysteme werden Rezyklate mit verbesserter Qualität erhalten, insbesondere mit einer guten Homogenität. Diese Rezyklate eignen sich aufgrund ihrer guten Qualität daher für die weitere Verarbeitung, insbesondere für die Verarbeitung zu Formteilen.

Im Rahmen der vorliegenden Erfindung wird unter dem Begriff "recyclefähig" bzw. "Recyclefähigkeit" die Eignung eines Monomaterial-Mehrschichtsystems verstanden, sich mittels eines mechanischen Recyclingverfahrens zu einem Rezyklat mit hoher Homogenität verarbeiten zu lassen, selbst wenn das Monomaterial-Mehrschichtsystem einen Anteil von einem Zweikomponentenklebstoff von > 1,0 Gew.-% aufweist, bezogen auf das Gesamtgewicht des Monomaterial-Mehrschichtsystems. Die Homogenität des Rezyklats wird ermittelt, in dem man das Monomaterial-Mehrschichtsystem bei hohen Temperaturen in einem Extruder kompoundiert und aus dem Extrudat durch Pressen einen Film mit einer Dicke von 200 µm herstellt. Dieser Film wird optisch mit einem Lichtmikroskop und gegebenenfalls unterstützt mit einem Auswertungsprogramm auf Inhomogenitäten untersucht. Ein Rezyklat mit hoher bzw. guter Homogenität zeichnet sich dadurch aus, dass die Anzahl der Fehlstellen pro untersuchter Fläche von 1,1 cm², die mit Hilfe einer mikroskopischen Untersuchung ermittelt werden (Lichtmikroskop) < 3000, bevorzugt < 2000, besonders bevorzugt < 1800 ist. In Bezug auf die Gesamtfläche der Fehlstellen ist einen homogenes Rezyklat gegeben, wenn die Gesamtfläche der Fehlstellen im gepressten Film, der aus dem erzeugten Rezyklat gepresst worden ist, < 5%, bevorzugt < 3,5% beträgt. Abweichend davon kann die Homogenität an einem Film ermittelt werden, der hergestellt wird aus einem Extrudat, welches erhalten wird, in dem eine bestimmte Menge des zerkleinerten ausgehärteten Klebstoffes mit einer definierten Menge der weiteren Bestandteile des Monomaterialschichtsystems (alternativ: "die verwendeten Monomaterial-Schichten") bei hohen Temperaturen in einem Extruder kompoundiert und aus dem Extrudat durch Pressen einen Film herstellt. Diese Methode ist insbesondere geeignet dazu, den maximalen Klebstoffanteil zu ermitteln, bei dem noch ein recylingfähiges Monomaterial-Schichtsystem erhalten wird.

Die Verbundfestigkeit des Monomaterial-Mehrschichtsystems wird für die untersuchten Materialien im 180°-Schälversuch ermittelt (180°-Schälfestigkeit), in dem Verbundfolien in 15 mm breite Streifen zerschnitten werden. Anschließend werden die Streifen bei 23°C in einer Universalprüfmaschine für Schälfestigkeiten der Firma Zwick (Typ 5kN Allround Table-top BT2-FA005TH.A50.002) mit einer Geschwindigkeit von 100 mm/min bei einem Winkel von 2 × 90° (180°) abgezogen und die dabei erforderliche Kraft in Newton gemessen. Eine ausreichende Verbundfestigkeit ist gegeben, wenn ein Wert von mindestens 1,5 N/15mm nach 24 Stunden Lagerung bei Raumtemperatur (RT) erreicht wird.

Unter Monomaterial-Mehrschichtsystem wird erfindungsgemäß ein Schichtsystem verstanden, das aus wenigsten zwei Monomaterial-Schichten und einem Zweikomponentenklebstoff hergestellt wird. Die Herstellung umfasst oder besteht aus folgenden Schritten:
I) Bereitstellen von wenigstens zwei Monomaterial-Schichten;
II) Auftragen eines Zweikomponentenklebstoffs mittelbar oder unmittelbar auf wenigstens eine der beiden bereitgestellten Monomaterial-Schichten, wobei der Zweikomponentenklebstoff mindestens eine isocyanatreaktive-Komponente sowie mindestens eine Isocyanat-Komponente umfasst;
III) Verbinden der Monomaterial-Schichten mittels des Zweikomponentenklebstoffs sowie Aushärten des Zweikomponentenklebstoffs unter Erhalt des Monomaterial-Mehrschichtsystems;

wobei das Material der Monomaterial-Schichten Polyolefine umfasst und der Anteil des Polyolefins von 80,0 bis 99,30 Gew.-% beträgt, bezogen auf das Gesamtgewicht des Monomaterial-Mehrschichtsystems,
der Anteil des Zweikomponentenklebstoffs 0,7 bis 20,0 Gew.-% beträgt, bezogen auf das Gesamtgewicht des Monomaterial-Mehrschichtsystems,
die isocyanatreaktive-Komponente ein Polyesterpolyol mit einer Hydroxyzahl (OHZ) von ≤ 30 mgKOH/g aufweist,
wobei die isocyanatreaktive-Komponente Urethangruppen in einem Bereich von 0 bis 4 Gew.-%, bezogen auf das Gesamtgewicht des nicht-flüchtigen Anteil der isocyanat-reaktiven-Komponenten aufweist

Das Material der Monomaterial-Schicht umfasst Polyolefine, wobei der Anteil des Polyolefins von 80,0 bis 99,30 Gew.-%, bevorzugt von 90,0 bis 99 Gew.-% besonders bevorzugt von 95,0 bis 98,0 Gew.-%, bezogen auf das Gesamtgewicht des Monomaterial-Mehrschichtsystems beträgt. Dies sind vorzugsweise Polyolefin-Folien, welche darüber hinaus beschichtet sein können. Die Monomaterial-Schicht kann ferner dem Fachmann bekannte Zuschlagstoffe enthalten, insbesondere Antiblockmittel, Farbstoffe, Pigmente und Stabilisatoren. Die Monomaterial-Schichten, wie z.B. die Polyolefin-Folien, können durch verschiedene, dem Fachmann bekannte Verfahren, beispielsweise durch Blasfolienextrusion, hergestellt werden. Durch diese Verfahren können Monomaterial-Schichten aus mehreren Lagen unterschiedlicher oder gleicher Zusammensetzungen erhalten werden. Die Monomaterial-Schichten können zur Einstellung von gewünschten Eigenschaften optional unterhalb der Schmelztemperatur axial oder biaxial gestreckt und/oder mit einer Beschichtung beschichtet werden. Insbesondere kann eine Barriereschicht, beispielsweise aus Siliziumoxid, Aluminiumoxid, EVOH, PVOH oder Acrylaten und/oder eine Druckfarbe und/oder eine Primer auf mindestens eine Seite jeder Monomaterial-Mehrschicht aufgebracht werden. Bevorzugt werden die Monomaterialien so ausgewählt, dass sich durch die Beschichtung keine negativen Einflüsse auf das Recyclingverfahren und die Qualität der Rezyklate ergeben oder dass sie an geeigneter Stelle im Prozess entfernt werden können.

Die wenigstens zwei Monomaterial-Schichten unterscheiden sich vorzugsweise hinsichtlich des Schmelzpunkts um 5 bis 90 °C, bevorzugt 20 bis 60 °C, besonders bevorzugt 30 bis 40 °C. Ferner ist es bevorzugt, dass eine Schicht der wenigstens zwei Monomaterial-Schichten einen Schmelzpunkt von 100 bis 135 °C, bevorzugt 100 bis 125 °C und die andere Schicht einen Schmelzpunkt von 130 bis 190 °C, bevorzugt 130 bis 165 °C aufweist. Es ist auch möglich, zur Herstellung eines Monomaterial-Mehrschichtsystems Polyolefine mit einem identischen oder nahezu identischen Schmelzpunkt einzusetzen, wenn auf mindestens einer Seite des Monomaterial-Mehrschichtsystems eine Siegelschicht vorhanden ist. Schmelzpunkt und Schmelztemperatur werden hier synonym verwendet. Die Schmelztemperaturen werden bestimmt mittels DSC (differential scanning calometry) bei einer Aufheizrate von 20 K/min gemäß DIN EN ISO 11357-1:2017 (2017-02) und Normteil 11357-3:2017.

Es ist bevorzugt, dass das Polyolefin der Monomaterial-Schichten aus der Gruppe ausgewählt ist, umfassend oder bestehend aus Polyethylen, Polypropylen oder Mischungen aus mindestens zwei davon. Die Polyolefine können beispielsweise aus Alkenen wie Ethylen, Propylen, 1-Buten und/oder Isobuten durch Kettenpolymerisation hergestellt werden. Bevorzugt werden als Monomere Ethylen und/oder Propylen bei der Herstellung der Polyolefine eingesetzt.

Bevorzugt eingesetzt werden Monomaterial-Schichten, die im Wesentlichen aus Polypropylen (beispielsweise BOPP (biaxially oriented polypropylene)) und/oder Polyethylen, (beispielsweise BOPE (biaxially oriented polyethylene)) bestehen. Ganz besonders bevorzugt werden Monomaterialschichten eingesetzt, die aus Polyethylen, insbesondere aus BOPE (biaxially oriented polyethylen), bestehen. Vorzugsweise bestehen die Monomaterial-Schichtsysteme aus zwei Monomaterial-Schichten, die größtenteils aus Polyethylen aufgebaut sind oder aus zwei Monomaterial-Schichten, die größtenteils aus Polypropylen aufgebaut sind. Bevorzugt bestehen die Monomaterial-Schichtsysteme jeweils aus einer Monomaterial-Schicht, die größtenteils aus Polyethylen aufgebaut ist und einer Monomaterial-Schicht, die größtenteils aus Polypropylen aufgebaut ist.

Der Zweikomponentenklebstoff umfasst mindestens eine isocyanatreaktive-Komponente sowie mindestens eine Isocyanat-Komponente. Der Zweikomponentenklebstoff wird folgend auch 2K-Klebstoff oder 2K-Polyurethanklebstoff genannt. Der Anteil des Zweikomponentenklebstoffs beträgt 0,70 bis 20,0 Gew.-%, bevorzugt 0,70 bis 10,0 Gew.-%, weiter bevorzugt 1,0 bis 5,0 Gew.-%, bezogen auf das Gesamtgewicht des Monomaterial-Mehrschichtsystems.

Der Zweikomponentenklebstoff enthält als isocyanatreaktive-Komponente Polyesterpolyole. Polyesterpolyole weisen Polyester-Einheiten auf, die durch die Reaktion von Polyolen mit Poly(carbon)säuren bevorzugt durch eine Polykondensationsreaktion unter Wasserabspaltung entstehen.

Polyester-Einheiten können zudem auch durch die Isocyanat-Komponente in den Zweikomponentenklebstoff eingebracht werden. Bevorzugt werden die Polyester-Einheiten durch die isocyanatreaktive-Komponente in den Zweikomponentenklebstoff eingebracht.

Die isocyanatreaktive-Komponente des Zweikomponentenklebstoffs weist ein Polyesterpolyol mit einer Hydroxylzahl (OHZ) von ≤ 30 mgKOH/g, bevorzugt von 0,1 bis 25 mgKOH/g, ganz besonders bevorzugt von 0,5 bis 20 mgKOH/g auf.

Die isocyanatreaktive-Komponente weist Urethangruppen in einem Bereich von 0 bis 4 Gew.-%, bevorzugt von 0,1 bis 3,5 Gew.-%, besonders bevorzugt von 0,5 bis 3 Gew.-%, ganz besonders bevorzugt von 0,8 bis 2 Gew.-%, bezogen auf das Gesamtgewicht des nicht-flüchtigen Anteil der isocyanatreaktiven-Komponenten auf. Der nicht-flüchtige Anteil der isocyanatreaktiven-Komponente wird anhand der Norm DIN EN ISO 3251 (2019-09), Einwaage 1 g, Trocknung für 1 h bei 125 °C, ermittelt.

In einer bevorzugten Ausführungsform des Verfahrens weist die isocyanatreaktive-Komponente das Polyesterpolyol zu mindestens 50 Gew.-%, bevorzugt zu mindestens 55 Gew.-%, weiter bevorzugt zu mindestens 60 Gew.-%, mehr bevorzugt zu mindestens 65 Gew.-%, besonders bevorzugt zu mindestens 70 Gew.-%, bezogen auf die Gesamtmasse aller isocyanatreaktive Gruppenaufweisenden Bestandteile der isocyanatreaktiven-Komponenten auf.

Neben den Polyesterpolyolen als isocyanatreaktive-Komponente kann die isocyanat-reaktive-Komponente weitere Polyole aufweisen, beispielsweise Polyetherpolyole. Es ist aber auch denkbar, dass die isocyanatreaktive-Komponente andere Isocyanat-reaktive Gruppen, wie Amine aufweist.

In einer bevorzugten Ausführungsform des Verfahrens weist die isocyanatreaktive-Komponente des Zweikomponentenklebstoffs isocyanatreaktive Gruppen auf, bei denen es sich im Wesentlichen um Hydroxyl-Gruppen handelt. Im Wesentlichen, im Zusammenhang mit der Erfindung bedeutet, dass mindestens 90 %, bevorzugt 95 %, besonders bevorzugt 98 % aller Isocyanat-reaktiver Gruppen Hydroxyl-Gruppen sind.

Bevorzugt beinhaltet die isocyanatreaktive-Komponente des Zweikomponentenklebstoffs ausschließlich Polyole, insbesondere Polyesterpolyole als isocyanatreaktive Gruppen formende Komponente.

Die isocyanatreaktive-Komponente weist ausschließlich Moleküle mit Isocyanat-reaktiven Gruppen auf. Die isocyanatreaktive-Komponente kann sowohl Moleküle mit Aminogruppen aufweisen, wie organische Di- oder Polyamine wie beispielsweise 1,2-Ethylendiamin, 1,2- und 1,3-Diaminopropan, 1,4-Diaminobutan, 1,6-Diaminohexan, Isophorondiamin (IPDA), Isomerengemisch von 2,2,4- und 2,4,4-Trimethylhexamethylendiamin, 2-Methylpentamethylendiamin, Diethylentriamin, 4,4-Diaminodicyclohexylmethan und/oder Dimethylethylendiamin oder Mischungen aus mindestens zwei hiervon, als auch Hydroxylgruppen aufweisende oder bildende Moleküle wie Ethylacetat, Methylethylketon, Ethanol, Isopropanol, Aceton, Cyclohexanon, die hier lediglich beispielhaft aufgeführt sind.

Die isocyanatreaktive-Komponente kann in Lösungsmitteln, bevorzugt organischen Lösungsmitteln, besonders bevorzugt unpolaren Lösungsmitteln aufgenommen sein. Wenn von einem Gew.-% Anteil in der isocyanatreaktiven-Komponente gesprochen wird, so bezieht sich dieser Gew.-% Anteil ausschließlich auf die nicht- flüchtigen Bestandteile der isocyanatreaktiven-Komponente, also ohne Lösungsmittel oder andere Bestandteile, die in dem Lösungsmittel noch mit aufgenommen sind. Der nicht-flüchtige Anteil der isocyanatreaktiven-Komponente wird anhand der Norm DIN EN ISO 3251 (2019-09), Einwaage 1 g, Trocknung für 1 h bei 125 °C, ermittelt. Darüber hinaus kann die isocyanatreaktive-Komponente mit Füllstoffen, wie Calcit oder Talkum sowie mit weiteren Additiven wie UV-Stabilisatoren, Katalysatoren, Verdickern, Verdünnern, Farbstoffen, Pigmenten und vielem mehr versetzt werden.

Die isocyanatreaktive-Komponente weist bevorzugt keine Urethangruppen auf. Hydroxyfunktionelle Polyesterpolyole mit einer Hydroxylzahl von <30 mg KOH/g sind kommerziell erhältlich, zum Beispiel unter dem Markennamen NeoRez^{®} P900, NeoRez^{®} PL 806 und NeoRez^{®} PL 845 von Covestro Deutschland GmbH. Es ist aber möglich, Polyesterpolyole mit einem Diisocyanat so umzusetzen, dass ein hydroxyfunktionelles Polyesterpolyurethan entsteht, welches im Rahmen diese Erfindung ebenfalls als Polyester betrachtet wird. Allerdings ist die Verwendung von Polyesterurethanen gegenüber solchen Polyestern, die keine Urethangruppen aufweisen nicht bevorzugt. Der Gehalt an Urethangruppen in der isocyanatreaktiven-Komponente liegt im Bereich von 0 bis 4 Gew.- % bezogen auf das Gesamtgewicht des nicht-flüchtigen Anteil der isocyanat-reaktiven-Komponente.

In einer bevorzugten Ausführungsform des Verfahrens weist die isocyanatreaktive-Komponente Polyester auf, die als Aufbaukomponente mindestens eine Dicarbonsäure, ausgewählt aus der Gruppe bestehend aus Adipinsäure, Terephthalsäure, Sebacinsäure, Isophthalsäure oder einer Mischung aus mindestens zwei hiervon aufweist. Besonders bevorzugt als Aufbaukomponente der isocyanatreaktive-Komponente sind Gemische aus Adipinsäure, Terephthalsäure und Isophthalsäure oder aus Isophthalsäure, Terephthalsäure und Sebacinsäure.

In einer bevorzugten Ausführungsform des Verfahrens, weist der ausgehärtete Zweikomponentenklebstoff einen Anteil von 70,0 bis 99 Gew.-%, mehr bevorzugt von 75,0 bis 98 Gew.-%, besonders bevorzugt von 80,0 bis 97 Gew.-%, an Polyester-Einheiten auf, bezogen auf das Gesamtgewicht des ausgehärteten Zweikomponentenklebstoffs. Die Polyester-Einheiten werden bevorzugt zu 50 bis 100 Gew.-%, mehr bevorzugt zu 60 bis 99 Gew.-%, besonders bevorzugt zu 70 bis 97 Gew.-% durch das Polyesterpolyol als isocyanatreaktive-Komponente in den Zweikomponentenklebstoff eingebracht.

In einer bevorzugten Ausführungsform des Verfahrens enthält der Zweikomponentenklebstoff zudem organische Lösungsmittel, Katalysatoren, Füllstoffe, Prozesshilfsmittel, Haftvermittler, insbesondere Silane, Stabilisatoren, insbesondere Antioxidantien oder Mischungen aus mindestens zwei davon.

Die Herstellung von 2K-Polyurethanklebstoffen ist dem Fachmann grundsätzlich bekannt. Chemischer Aufbau und Formulierung sowie die Verarbeitung, insbesondere im Falle von 2K-Polyurethanklebstoffen zur Herstellung von Verbundfolien bzw. Mehrschichtverbundfolien sind in Ulrich Meier-Westhues, Polyurethane - Lacke, Kleb- und Dichtstoffe, Hannover: Vincenz Network 2007, Kapitel 6, bspw. auf Seiten 247-253 beschrieben.

Unter der durchschnittlichen Funktionalität einer Verbindung ist, wenn nicht anders beschrieben, die mittlere Anzahl an isocyanatfunktionellen oder hydroxyfunktionellen Gruppen bzw. Isocyanatgruppen oder Hydroxylgruppen pro Molekül zu verstehen. Bei nicht definierten bzw. einheitlich zusammengesetzten Verbindungen wie beispielsweise Oligomeren oder Polymeren stehen dem Fachmann verschiedene Methoden zur Ermittlung der mittleren Funktionalität zur Verfügung. Beispielsweise lässt sich aus dem IsocyanatGehalt und dem beispielsweise durch Gelpermeationschromatographie (GPC) oder Dampfdruckosmose ermittelten zahlenmittleren Molekulargewicht (Mn) eine mittlere Funktionalität berechnen. Analog kann bei den Isocyanat-reaktiven Verbindungen vorgegangen werden. Die mittlere OH-Funktionalität z einer Verbindung beispielsweise kann auf Basis des zahlenmittleren Molekulargewichts Mn und der Hydroxylzahl berechnet werden. Die Hydroxylzahl (OH-Zahl) einer Verbindung wird, wenn nicht anders angegeben, gemäß DIN EN ISO 4629-2:2016 bestimmt, wobei N-Methylpyrroldion durch Pyridin ersetzt wird.

Bevorzugt weist die Isocyanat Komponente eine durchschnittliche Funktionalität von > 2, mehr bevorzugt von > 2,2 auf. Bevorzugt weist die isocyanatreaktive-Komponente eine durchschnittliche Funktionalität von > 0,1bis < 6, mehr bevorzugt von > 0,2 bis < 5, besonders bevorzugt von > 0,4 bis < 4 auf.

Wenn nicht anders beschrieben, wird das zahlenmittlere Molekulargewicht Mn, sowie das das gewichtsmittlere Molekulargewicht Mw nach DIN EN ISO 13885-1:2021 (ISO 13885-1:2020) "Gelpermeationschromatographie, Teil I - Tetrahydrofuran als Elutionsmittel" ermittelt.

Unter "isocyanatreaktiven Gruppen" werden im Rahmen der vorliegenden Erfindung funktionelle Gruppen verstanden, die mit Isocyanatgruppen (-N=C=O) bei Temperaturen bis 200° C und ggf. unter Katalysatorzugabe unter Ausbildung mindestens einer kovalenten Bindung reagieren können. Isocyanat-reaktive Verbindungen sind beispielsweise Verbindungen mit isocyanat-reaktiven Gruppen in Form von aktiven Wasserstoffatomen. Beispiele für solche Verbindungen sind Wasser, Alkohole, primäre und sekundäre Amine, Thiole und Carbonsäuren. Verbindungen die kein aktives Wasserstoffatom enthalten aber dennoch Isocyanat-reaktiv sind, sind beispielsweise Epoxide, Oxime, Kohlendioxid und Carbonsäureanhydride. Geeignete reaktionsfähige funktionelle Gruppen können im Sinne einer Reaktion mit Isocyanaten monofunktionell sein, beispielsweise Hydroxid-Gruppen oder Mercaptogruppen. Sie können jedoch auch gegenüber Isocyanaten difunktionell sein, beispielsweise Aminogruppen. Ein Molekül mit einer Aminogruppe weist demnach auch zwei gegenüber Isocyanatgruppen reaktionsfähige funktionelle Gruppen auf. Es ist in diesem Zusammenhang nicht notwendig, dass ein einziges Molekül zwei getrennte, gegenüber Isocyanatgruppen reaktionsfähige funktionelle Gruppen aufweist - entscheidend ist, dass das Molekül mit zwei Isocyanatgruppen unter Ausbildung jeweils einer kovalenten Bindung eine Verbindung eingehen kann. Beispiele für Strukturmerkmale, die durch Reaktion von Isocyanatgruppen mit Isocyanat-reaktiven Verbindungen erzeugt werden sind Urethan-, Allophanat-, Biuret-, Harnstoff-, Thiourethan-, Amid-, Imid-, Acylharnstoff-, Oxazolidion,- Carbamat-, Oxadiazinetrion. Beispiele für Stukturmerkmale, die durch Reaktion von wenigstens zwei Isocyanatgruppen gebildet werden sind Uretdion, Isocyanurat, Carbodiimid. Zur Bildung dieser Gruppen werden in der Regel Katalysatoren eingesetzt. Beispiele für geeignete Katalysatoren werden im Kapitel XII. Summary of Catalytic Effects High Polymers Vol. XVI Polyurethanes: Chemistry and Technology, Part 1. Chemistry J.H. Saunders and K.C. Frisch, John Wiley & Sons (Library of Congress Catalog Card Number 62-18932) aufgeführt.

Es ist bevorzugt, dass die isocyanatreaktive-Komponente des Zweikomponentenklebstoffs Polyole, insbesondere Polyesterpolyole, Polyetherpolyole oder Mischungen aus mindestens zwei der vorgenannten Verbindungen umfasst oder daraus besteht. Unter einem Polyol wird ein polyfunktioneller Alkohol verstanden, d.h. eine Verbindung mit mehr als einer NCO reaktiven Gruppe im Molekül.

Als Polyesterpolyole sind insbesondere Polyester geeignet, welche mindestens zwei funktionelle Gruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Die Polyesterpolyole können durch Polykondensation hergestellt werden, die einen oder mehrere Reaktionsschritte in Gegenwart eines Lösungsmittels (z. B. Xylol als Azeotrop) umfasst, und/oder in der Bulk-Synthese vorgenommen werden. Vorzugsweise wird Polyesterpolyol durch Massensynthese-Polykondensationsreaktion hergestellt.

Die Polykondensation findet bevorzugt unter einer Stickstoffatmosphäre bei Temperaturen im Bereich von 160 bis 260 °C statt. Als Additive können Katalysatoren wie Dibutylzinnoxid, Butylchlorotindihydroxid, Butylstanansäure oder Tetrabutoxytitanat und Antioxidantien wie Phosphorsäure, Trisnonylphenylphosphit oder Triphenylphosphit zugesetzt werden. Während der Reaktion wird Wasser freigesetzt und vorzugsweise durch Destillation entfernt. Der gewünschte Veresterungsgrad kann durch azeotrope Destillation und/oder Vakuum eingestellt werden.

Bevorzugt ist das mindestens eine Polyesterpolyol erhältlich, oder wird erhalten durch die Umsetzung der mindestens folgenden Komponenten:
a) einem Alkoholbestandteil, wobei der Alkoholbestandteil aus der Gruppe ausgewählt ist, die aus monofunktionellen Alkoholen, difunktionellen Alkoholen und drei- oder höher funktionellen Alkoholen und Mischungen aus mindestens zwei davon besteht, mit
b) einem sauren Bestandteil, wobei der saure Bestandteil aus der Gruppe ausgewählt ist, die aus monofunktionellen Carbonsäuren, difunktionellen Carbonsäuren, tri- oder höher funktionellen Carbonsäuren, Carbonsäureanhydriden, Estern von Carbonsäuren, Chloriden der Carbonsäure und Mischungen aus mindestens zwei davon besteht, und/oder
c) gegebenenfalls einer Carbonsäure, die ionische funktionelle Gruppen enthält, und/oder
d) gegebenenfalls einer Hydroxycarbonsäure, wobei der Hydroxycarbonsäurebestandteil ausgewählt ist aus der Gruppe, die aus Monomeren mit einer Hydroxylgruppe und einer Carbonsäuregruppe oder deren Lactonen besteht, Monomeren mit mindestens zwei Hydroxylgruppen und einer Carbonsäuregruppe, Monomeren mit einer Hydroxylgruppe und mindestens zwei Carbonsäuregruppen, Monomeren mit zwei oder mehr Hydroxylgruppen und zwei oder mehr Carbonsäuregruppen, und Mischungen aus mindestens daraus,

gemeint.
Besonders bevorzugt als Polyesterpolyole sind solche, die aus dem Bestandteilen a) und b) gebildet werden.

Alkoholbestandteile a) können beispielsweise **monofunktionellen Alkohol** zur Herstellung von Polyesterharz umfassen, sind aber nicht beschränkt auf 2-Ethylhexanol-, Octanol-Nonanol-, Caprin-, Mystryl-, Cetyl- und Isostearylalkohole und Mischungen von mindestens zwei davon.

Alkoholbestandteile a) können weiterhin **difunktionelle Alkohole** zur Herstellung von Polyesterharz sein, sind aber nicht beschränkt auf unter anderem Ethylenglykol, Diethylenglykol, Triethylenglykol, Tetraethylenglykol, Polyethylenglykol (Mn = 100-4000), 1,2-Propandiol, Dipropylenglykol, Tripropylenglykol, Tetrapropylenglykol, Polypropylenglykol (Mn = 100-4000), 1,3-Propandiol, 1,4-Butandiol, 1,3-Butandiol, 2,3-Butandiol, 1,5-Pentandiol, 1,6-Hexandiol, 2,2-Dimethyl-1,3-propandiol, 1,4-Dihydroxycyclohexan, 1,8-octandiol, 1, 10-Decandiol, 1,12-Dodecandiol, 2-Methyl-1,3-propandiol, 3-Methyl-1,5-pentandiol, Neopentylglykol, Tricyclodecandimethanol oder Gemische aus mindestens zwei davon.

Alkoholbestandteile a) können weiterhin beispielsweise **tri- oder höher funktionelle Alkohole** zur Herstellung von Polyesterharz umfassen, sind aber nicht beschränkt auf Trimethylolpropan, Trimethylolethan, Glycerin, Pentaerythrit, Bis(trimethylolpropan)-ether, Xylit, Dipentaerythrit, Sorbit und Mischungen aus mindestens zwei davon.

Saure Bestandteile b) können beispielsweise **monofunktionelle Säuren** zur Herstellung von Polyesterharz sein, aber nicht beschränkt auf unter anderem Caprylsäure, Caprinsäure, Laurinsäure, Myristinsäure, Palmitinsäure, Stearinsäure, Arachinsäure, Behensäure, dehydrierte Rizinusölfettsäure, Sonnenblumenfettsäure, Linolensäure und/oder Linolensäure, Tallölfettsäure, Benzoesäure, Zimtsäure und Mischungen aus mindestens zwei daraus.

Saure Bestandteile b) können beispielsweise **difunktionelle Carbonsäuren** zur Herstellung von Polyesterharz umfassen, sind aber nicht beschränkt auf Terephthalsäure, Isophthalsäure, Phthalsäure und entsprechende Anhydrid Strukturen, 2,6-Naphthalendicarbonsäure, 4,4'-Oxybisbenzoesäure, 1,4-Cyclohexandicarbonsäure, Hexahydrophthalsäure (Anhydrid), Tetrahydrophthalsäure (Anhydrid), Azelainsäure, Sebacinsäure, Dodecandisäuresäure, Dimerfettsäure, Adipinsäure, Bernsteinsäure (Anhydrid), Fumarsäure, Glutarsäure, Itaconsäure, Pimelsäure, Suberiansäure, Maleinsäure(anhydrid), Malonsäure und Mischungen aus mindestens zwei daraus.

Saure Bestandteile b) können weiterhin beispielsweise **tri- oder höher funktionelle Carbonsäuren** zur Herstellung von Polyesterharz umfassen, sind aber nicht beschränkt auf Trimellitsäure (Anhydrid), Pyromellitsäure (Anhydrid) und Mischungen aus mindestens zwei davon.

Carbonsäuren c), können beispielsweise **difunktionelle Carbonsäuren, die ionische Gruppen zur** Herstellung von Polyesterharz enthalten, umfassen, sind aber nicht beschränkt auf 5-(Sulfo)isophthalsäure-Natriumsalz und 5-(Sulfo)isophthalsäure-Lithiumsalz und Mischungen aus mindestens zwei daraus.

Beispiele für d), Beispiele für **Hydoxycarbonsäuren** zur Herstellung von Polyesterharz umfassen, sind aber nicht beschränkt auf Glykolsäure, Milchsäure, Mandelsäure, Pivalsäure, Hydroxystearinsäure, Ricinolsäure, Hydroxybenzoesäure, Ferulasäure, Dimethylolpropionsäure, Weinsäure, Galactarsäure, Zitronensäure und Mischungen aus mindestens zwei davon.

Hydroxycarbonsäuren d), können beispielsweise geeignete **Lactone** zur Herstellung von Polyesterharz sein, aber nicht beschränkt auf unter anderem Lactid, Butyrolacton, ε-Caprolacton und Mischungen aus mindestens zwei daraus.

Der Polyester bzw. die isocyanatreaktive-Komponente weist bevorzugt keine Urethangruppen auf und eine Hydroxylzahl von <30 mg KOH/g. Es ist möglich, Polyesterpolyole auch mit einem Diisocyanat so umzusetzen, dass eine hydroxyfunktionelles Polyesterpolyurethan entsteht, welches im Rahmen diese Erfindung ebenfalls als Polyester betrachtet wird. Allerdings ist die Verwendung von Polyesterurethanen gegenüber solchen Polyestern, die keine Urethangruppen aufweisen nicht bevorzugt. Der Gehalt an Urethangruppen in der isocyanatreaktiven-Komponente liegt im Bereich von 0 bis 4 Gew.-% bezogen auf das Gesamtgewicht des nicht-flüchtigen Anteil der isocyanat- reaktiven Komponente.

Vorzugsweise weist der Polyester als isocyanat-reaktive Komponente ein zahlenmittleres Molekulargewicht Mn im Bereich von 2000 bis 15000 g/mol, bevorzugt 4000 bis 12000 g/mol und am meisten bevorzugt 5000 bis 11000 g/mol auf.

In einer bevorzugten Ausführungsform des Verfahrens weist der Polyester ein durchschnittliches Gewichtsmolekulargewicht Mw im Bereich von 5000 bis 100000 g/mol, besonders bevorzugt von 6.000 bis 80.000 g/mol und am meisten bevorzugt von 8000 bis 70.000 g/mol auf.

Vorzugsweise liegt die Säurezahl des erfindungsgemäßen Polyesters in einem Bereich von 0 bis 10 mg KOH/g, besonders bevorzugt 0 bis 5 mg KOH/g und am meisten bevorzugt 0 bis 4 mg KOH/g.

Vorzugsweise liegt die Hydroxylzahl des erfindungsgemäßen Polyesters in einem Bereich von 0 bis 30 mg KOH/g, besonders bevorzugt 0,1 bis 30 mg KOH/g und am meisten bevorzugt 1 bis 25 mg KOH/g.

Vorzugsweise basieren die Polyester auf einer Kombination von mindestens einer aromatischen und einer aliphatischen Säure. Vorzugsweise liegt das Molverhältnis zwischen der aromatischen und der aliphatischen Säure zwischen 95:5 bis 5:95, besonders bevorzugt zwischen 80:20 und 20:80 und am meisten bevorzugt zwischen 70:30 und 30:70.

Hinsichtlich der Isocyanat-Komponente des Zweikomponentenklebstoffs ist bevorzugt, dass diese Isocyanat-Gruppen in einer Anzahl von 2 bis 5, bevorzugt von 2 bis 4, besonders bevorzugt von 2 bis 3 aufweist, welche auch als Funktionalität bezeichnet wird.

In einer bevorzugten Ausführungsform des Verfahrens, ist die Isocyanat-Komponente des Zweikomponentenklebstoffs ausgewählt aus der Gruppe bestehend aus:
- monomere Polyisocyanate, insbesondere Hexamethylen-1,6-diisocyanat, Pentamethylen-1,5-diisocyanat, 1,4-Butandiisocyanat, Isophorondiisocyanat, Toluol-2,4-diisocyanat, Toluol-2,6-diisocyanat, Diphenylmethan-2,2'-diisocyanat, Diphenylmethan-2,4'-diisocyanat, Diphenylmethan-4,4'-diisocyanat oder Mischungen aus mindestens zwei davon;
- oligomere Polyisocyanate, welche aus mindestens zwei monomeren Polyisocyanaten hergestellt werden;
- Isocyanat-terminierte Präpolymere, welche durch Umsetzung von monomeren und/oder oligomeren Polyisocyanaten und Isocyanat-reaktiven Verbindungen mit > 1 Isocyanat-reaktiven Gruppen pro Moleküle hergestellt werden, wobei die Isocyanat-reaktive Verbindung bevorzugt Polyole, Polyacrylate, Polycarbonate, Polyester, Polyurethane und/oder Polyether umfasst oder daraus besteht;
- oder Mischungen aus mindestens zwei der vorgenannten Verbindungen

Die Isocyanat-Komponente weist ausschließlich Moleküle mit Isocyanat-Gruppen auf. Die Isocyanat-Komponente kann in Lösungsmitteln, bevorzugt organischen Lösungsmitteln, besonders bevorzugt unpolaren Lösungsmitteln aufgenommen sein. Wenn von einem Gew.-% Anteil in der Isocyanat- Komponente gesprochen wird, so bezieht sich dieser Gew.-% Anteil ausschließlich auf die nicht-flüchtigen Bestandteile der Isocyanat-Komponente, also ohne Lösungsmittel oder andere Bestandteile, die in dem Lösungsmittel noch mit aufgenommen sein können. Der nicht-flüchtige Anteil der Isocyanat-Komponente wird anhand der Norm DIN EN ISO 3251 (2019-09), Einwaage 1 g, Trocknung für 1 h bei 125 °C, ermittelt.

Der Begriff "Polyisocyanat", wie hier verwendet, ist eine Sammelbezeichnung für Verbindungen, die im Molekül zwei oder mehrere Isocyanatgruppen (hierunter versteht der Fachmann freie Isocyanat-Gruppen der allgemeinen Struktur -N=C=O) enthalten. Einfachste und wichtigste Vertreter dieser Polyisocyanate sind die Diisocyanate. Diese haben die allgemeinen Struktur O=C=N-R-N=C=O, wobei R üblicherweise für aliphatische, cycloaliphatische, und/oder aromatische Reste steht.

Der Begriff "Polyisocyanate" bezeichnet in dieser Anmeldung also monomere und oligomere Polyisocyanate gleichermaßen. Wenn in dieser Anmeldung von "oligomeren Polyisocyanaten" die Rede ist, dann sind damit Polyisocyanate gemeint, die aus mindestens zwei monomeren Polyisocyanatmolekülen aufgebaut sind, d.h. es sind Verbindungen, die ein Reaktionsprodukt aus mindestens zwei monomeren Polyisocyanatmolekülen darstellen oder enthalten. Bevorzugt sind besagte monomere Polyisocyanate Diisocyanate, d.h. monomere Isocyanate mit zwei Isocyanatgruppen pro Molekül. In Abgrenzung von den weiter unten in dieser Anmeldung definierten isocyanatterminierten Präpolymeren sind oligomere Polyisocyanate durch ein Molekulargewicht von höchstens 900 g/Mol, bevorzugt höchstens 800 g/Mol und besonders bevorzugt höchstens 700 g/Mol charakterisiert.

Bevorzugt weist die Isocyanat-Komponente eine durchschnittliche Funktionalität von > 2 bis < 4, mehr bevorzugt von > 2,1 bis < 3,5 auf.

Die oligomeren Polyisocyanate können erfindungsgemäß insbesondere Uretdion-, Isocyanurat-, Allophanat-, Biuret-, Iminooxadiazindion- und/oder Oxadiazintrionstruktur aufweisen. Gemäß einer Ausführungsform der Erfindung weisen die oligomeren Polyisocyanate mindestens eine der folgenden oligomeren Strukturtypen oder deren Gemische auf:

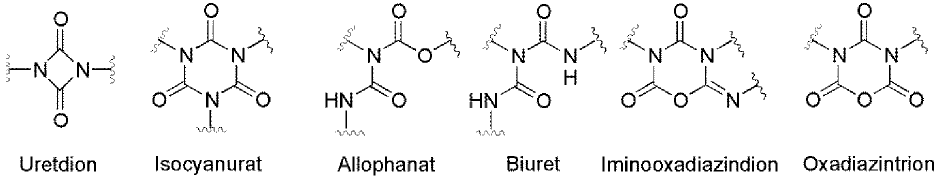

Herstellverfahren für die erfindungsgemäß einzusetzenden oligomeren Polyisocyanate mit Uretdion-, Isocyanurat-, Allophanat-, Biuret-, Iminooxadiazindion- und/oder Oxadiazintrionstruktur sind beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP A 0 339 396 und EP-A 0 798 299 beschrieben.

Bei einem Isocyanat mit aliphatisch gebundenen Isocyanatgruppen sind alle Isocyanatgruppen an ein sp³-hybridisiertes Kohlenstoffatom gebunden. Bevorzugte Polyisocyanate mit aliphatisch gebundenen Isocyanatgruppen sind n-Butylisocyanat und alle Isomeren davon, n-Pentylisocyanat und alle Isomeren davon, n-Hexylisocyanat und alle Isomeren davon, 1,4-Butyldiisocyanat, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan 1,10-Diisocyanatodecan, und Triisocyantononan.

Bei einem Isocyanat mit cycloaliphatisch gebundenen Isocyanatgruppen sind alle Isocyanatgruppen an Kohlenstoffatome gebunden, die Teil eines geschlossenen Rings aus Kohlenstoffatomen sind. Dieser Ring kann an einer oder mehreren Stellen ungesättigt sein, solange er durch das Vorliegen von Doppelbindungen keinen aromatischen Charakter erhält. Bevorzugte Polyisocyanate mit cycloaliphatisch gebundenen Isocyanatgruppen sind Cyclohexylisocyanat, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan Isophorondiisocyanat; (IPDI), 1-Isocyanato-1-methyl-4(3)-isocyanatomethylcyclohexan, 2,4'- und 4,4'-Diisocyanatodicyclohexylmethan(H12MDI), 1,3-und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyl-dicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetramethyl-1,1'-bi(cyclohexyl), 1,8-Diisocyanato-p-menthan, 1,3-Diisocyanato-adamantan und 1,3-Dimethyl-5,7-diisocyanatoadamantan.

Bei einem Isocyanat mit araliphatisch gebundenen Isocyanatgruppen sind alle Isocyanat-gruppen an Alkylenreste gebunden, der ihrerseits an einen aromatischen Ring gebunden sind. Bevorzugte Polyisocyanate mit araliphatisch gebundenen Isocyanatgruppen sind 1,3- und 1,4-Bis-(isocyanatomethyl)benzol (Xylendiisocyanat; XDI), 1,3- und 1,4-Bis(1-isocyanato-1-methylethyl)-benzol (TMXDI) und Bis(4-(1-isocyanato-1-methylethyl)phenyl)-carbonat.

Bei einem Isocyanat mit aromatisch gebundener Isocyanatgruppe sind alle Isocyanatgruppen direkt an Kohlenstoffatome gebunden, die Teil eines aromatischen Ringes sind. Bevorzugte Isocyanate mit aromatisch gebundenen Isocyanatgruppen sind 2,4- und 2,6-Diisocyanatotoluol (TDI), 2,4'- und 4,4'-Diisocyanatodiphenylmethan (MDI), 1,5-Diisocyanatonaphthalin, Tris-(p-isocyanatophenyl)-thiophosphat und Triphenylmethan-4,4',4"-Triisocyanat.

Es ist bevorzugt, dass die Isocyanat-Komponente ausschließlich aliphatische Isocyanate beinhaltet. Insbesondere ist es bevorzugt, dass die Isocyanat-Komponente ein HDI, sei es als Monomer, Dimer oder Trimer, umfasst oder daraus besteht.

Isocyanat-terminierte Präpolymere werden durch Umsetzung von monomeren oder oligomeren Polyisocyanaten mit Verbindungen erhalten, die im Durchschnitt mehr als eine Isocyanat-reaktive Gruppe pro Molekül enthalten, wobei im Reaktionsgemisch ein molarer Überschuss an Isocyanatgruppen gegenüber den Isocyanat-reaktiven Gruppen vorliegt.

Bevorzugt handelt es sich bei den Verbindungen, die im Durchschnitt mehr als eine Isocyanat-reaktive Gruppe pro Molekül enthalten um Polyole und/oder Polyamine, wobei im Reaktionsgemisch ein molarer Überschuss an Isocyanatgruppen gegenüber Amino- und Hydroxylgruppen vorliegt. Entsprechende Herstellungsverfahren sind dem Fachmann gut bekannt.

Die erfindungsgemäß einzusetzenden 2K-Polyurethanklebstoffe lassen sich zu einem signifikanten Teil ausgehend von nachwachsenden Rohstoffen (insbesondere Biomethanol) herstellen. In diesem Fall werden beispielsweise Diisocyanate mit einem Anteil aus biobasiertem Kohlenstoff eingesetzt, beispielsweise wird Pentamethlyendiisocyanat hergestellt aus biobasiertem Cadaverin, Hexamethlendiisocyanat basierend auf biobasierendem Hexamethylendiamin, Methylendiisocyanat hergestellt auf biobasiertem Anilin und/oder Isophorondiisocyanat hergestellt aus biobasiertem Aceton oder aus diesen Verbindungen aufgebaute Derivate, Oligomere und/oder Prepolymere eingesetzt.

Die entsprechenden genannten Diamine sind über enzymatische Umwandlungen beispielsweise aus Zucker oder Stärkeverbindungen zugänglich.

In einer bevorzugten Ausführungsform des Verfahrens, weist die Isocyanat-Komponente einen Gehalt an Isocyanatgruppen in einem Bereich von 5 bis 35 Gew.-%, bevorzugt von 8 und 25 Gew.-%, ganz besonders bevorzugt von 10 bis 23 Gew.-%, bezogen auf das Gesamtgewicht der Isocyanat-Komponente auf.

In einer bevorzugten Ausführungsform des Verfahrens, liegt der Gehalt an Isocyanat-Gruppen in einem Bereich von 0,5 bis 2,5 Gew.-%, bezogen auf die Gesamtmenge an Isocyanat-Komponente und Isocyanat-reaktiver Komponente.

In einer bevorzugten Ausführungsform des Verfahrens, ist das Polyolefin der Monomaterial-Schichten aus der Gruppe ausgewählt, umfassend oder bestehend aus Polyethylen, Polypropylen oder Mischungen davon. Insbesondere ist das Polyolefin ein Polyethylen.

In einer bevorzugten Ausführungsform des Verfahrens beträgt der Anteil des Polyolefins von 95,0 bis 99,3 Gew.-% und/oder der Anteil des Zweikomponentenklebstoffs von 0,70 bis 10,0 Gew.-%, bevorzugt 1,0 bis 5,0 Gew.-%, jeweils bezogen auf das Gesamtgewicht des Monomaterial-Mehrschichtsystems.

Die Erfindung betrifft ferner Monomaterial-Mehrschichtsysteme, insbesondere recyclefähige Monomaterial-Mehrschichtsysteme, welche durch das erfindungsgemäße Verfahren erhalten werden oder erhältlich sind. Die erfindungsgemäßen Monomaterial-Mehrschichtsysteme lassen sich dabei unter anderem als, vorzugsweise recyclefähiges, Verpackungsmaterial, insbesondere Verpackungsmaterial für Lebensmittel einsetzen.

Die Erfindung betrifft weiterhin die Verwendung eines erfindungsgemäßen Zweikomponentenklebstoffs in Monomaterial-Mehrschichtsystemen, insbesondere zur Verbesserung der Recyclingfähigkeit von Monomaterial-Mehrschichtsystemen, wobei das Material der Monomaterial-Schichten Polyolefine mit einem Anteil von 80,0 bis 99,3 Gew.-% umfasst, bezogen auf das Gesamtgewicht des Monomaterial-Mehrschichtsystems.

Da sich die erfindungsgemäßen Monomaterial-Mehrschichtsystem zur Herstellung von hochwertigen Rezyklaten eignen, betrifft die Erfindung folglich auch ein Verfahren zur Gewinnung eines Rezyklats aus Monomaterial-Mehrschichtsystem-haltigem Abfall, welcher ein erfindungsgemäßes Monomaterial-Mehrschichtsystem enthält, wobei die Gewinnung die folgenden Schritte umfasst:
i. Zerkleinerung, Waschen und optional Sterilisation des Monomaterial-Mehrschichtsystem-haltigen Abfalls unter Erhalt einer Materialmischung;
ii. Optional Sortierung der Materialmischung;
iii. Optional Mischen der Materialmischung mit weiteren Bestandteilen, insbesondere mit Polyolefinen;
iv. Weitere Aufarbeitung, insbesondere Schmelzen und Extrudieren, der Materialmischung unter Erhalt des Rezyklats.

Bei diesem Verfahren handelt es sich also um ein mechanisches Recyclingverfahren. Es können dabei neben den erfindungsgemäßen auch nicht erfindungsgemäße Monomaterial-Mehrschichtsysteme, insbesondere recyclebare Monomaterial-Mehrschichtsysteme, sowie weitere Zuschlagstoffe (weitere Bestandteile) wie synthetisch hergestelltes bzw. nicht wiederverwendetes PE oder PO Granulat (sogenannte "Virgin" Materialien bzw. "Virgin-Polyolefine") eingesetzt werden.

Unter Rezyklat im Sinne der Erfindung versteht man also ein Produkt, welches zumindest nach Zerkleinerung und Waschen des Monomaterial-Mehrschichtsystem-haltigen Abfalls und weiterer Aufarbeitung erhalten wird. Bevorzugt beinhaltet die weitere Aufarbeitung einen Extrusionsprozess, wobei das Rezyklat dann z.B. in Granulat- oder Strangform erhalten werden kann. Das Rezyklat umfasst mindestens ein Polyolefin und mindestens einen 2K-Polyurethanklebstoff in ausgehärteter Form.

Die erfindungsgemäßen Rezyklate können zur Herstellung von Folien oder anderen Formteilen eingesetzt werden, gegebenenfalls unter Zugabe von (weiteren) Virgin-Polyolefinen. Folglich betrifft die Erfindung auch Formteile und Folien erhalten oder erhältlich durch die Verarbeitung eines gemäß dem erfindungsgemäßen Recyclingverfahrens erhaltenen oder erhältlichen Rezyklats.

Daher betrifft die Erfindung auch Formteile erhalten oder erhältlich durch die Verarbeitung eines nach dem erfindungsgemäßen Verfahren zur Gewinnung eines Rezyklats hergestellten Rezyklats. Bevorzugt handelt es sich bei den Formteilen um Monomaterial-Mehrschichtsysteme für Verpackungen wie Flaschen und Kanister für Haushalts- und Reinigungsmittel, Eimer, Behälter und Kunststoffboxen, Verpackungsfolien und Müllsäcke, Versandverpackungen (z. B. Versandtaschen, Luftpolsterfolien). Weiterhin können auch Bau- und Industrieprodukte wie Kunststoffrohre (z. B. Drainage- und Kabelschutzrohre), Paletten, Kabelummantelungen und Baufolien Schallschutz- und Dämmmaterialien aus dem Rezyklat gefertigt werden, wie auch Teile aus der Automobilindustrie wie Innenverkleidungen und Stoßfänger oder technische Kunststoffteile. Für Haushalts- und Freizeitprodukte wie Gartenmöbel, Blumentöpfe und Komposter, Spielzeuge sowie Werkzeugkästen und Aufbewahrungsboxen, aber auch für Textil- und Faserprodukte wie Geotextilien und Vliesstoffe für Landwirtschaft und Bau sowie recycelte PolypropylenFasern für Teppiche oder Möbelstoffe können die Rezyklate gleichfalls eingesetzt werden.

### Ausführungsformen:

Die Erfindung betrifft insbesondere folgende Ausführungsformen:
Nach einer ersten Ausführungsform betrifft die Erfindung ein Verfahren zur Herstellung eines Monomaterial-Mehrschichtsystems, insbesondere eines recyclefähigen Monomaterial-Mehrschichtsystems, wobei das Verfahren die folgenden Schritte umfasst oder daraus besteht:
I) Bereitstellen von wenigstens zwei Monomaterial-Schichten;
II) Auftragen eines Zweikomponentenklebstoffs mittelbar oder unmittelbar auf wenigstens eine der beiden bereitgestellten Monomaterial-Schichten, wobei der Zweikomponentenklebstoff mindestens eine isocyanatreaktive-Komponente sowie mindestens eine Isocyanat-Komponente umfasst;
III) Verbinden der Monomaterial-Schichten mittels des Zweikomponentenklebstoffs sowie Aushärten des Zweikomponentenklebstoffs unter Erhalt des Monomaterial-Mehrschichtsystems;

dadurch gekennzeichnet, dass das Material der Monomaterial-Schichten Polyolefine umfasst und der Anteil des Polyolefins von 80,0 bis 99,30 Gew.-% beträgt, bezogen auf das Gesamtgewicht des Monomaterial-Mehrschichtsystems,
der Anteil des Zweikomponentenklebstoffs 0,7 bis 20,0 Gew.-% beträgt, bezogen auf das Gesamtgewicht des Monomaterial-Mehrschichtsystems,
die isocyanatreaktive-Komponente ein Polyesterpolyol mit einer Hydroxyzahl (OHZ) von ≤ 30 mgKOH/g aufweist,
wobei die isocyanatreaktive-Komponente Urethangruppen in einem Bereich von 0 bis 4 Gew.-%, bezogen auf das Gesamtgewicht des nicht-flüchtigen Anteil der isocyanatreaktiven-Komponenten aufweist.

Nach einer zweiten Ausführungsform betrifft die Erfindung ein Verfahren nach der ersten Ausführungsform, dadurch gekennzeichnet, dass die isocyanatreaktive-Komponente des Zweikomponentenklebstoffs Polyole, insbesondere Polyesterpolyole, Polyetherpolyole, oder Mischungen aus mindestens zwei der vorgenannten Verbindungen umfasst oder daraus besteht.

Nach einer dritten Ausführungsform betrifft die Erfindung ein Verfahren nach der ersten oder zweiten Ausführungsform, wobei dass die isocyanatreaktive-Komponente das Polyesterpolyol zu mindestens 50 Gew.-%, bevorzugt zu mindestens 60 Gew.-%, besonders bevorzugt zu mindestens 70 Gew.-% bezogen auf die Gesamtmasse aller isocyanatreaktive Gruppenaufweisenden Bestandteile der isocyanatreaktiven-Komponenten, aufweist.

Nach einer vierten Ausführungsform betrifft die Erfindung ein Verfahren nach einer der vorhergehenden Ausführungsformen, wobei die isocyanatreaktive-Komponente des Zweikomponentenklebstoffs isocyanatreaktive Gruppenaufweist, bei denen es sich im Wesentlichen um Hydroxyl-Gruppen handelt.

Nach einer fünften Ausführungsform betrifft die Erfindung ein Verfahren nach einer der vorhergehenden Ausführungsformen, wobei die isocyanatreaktive-Komponente Polyester aufweist, die als Aufbaukomponente mindestens eine Dicarbonsäure, ausgewählt aus der Gruppe bestehend aus Adipinsäure, Terephthalsäure, Sebacinsäure, Isophthalsäure oder einer Mischung aus mindestens zwei hiervon aufweist.

Nach einer sechsten Ausführungsform betrifft die Erfindung ein Verfahren nach einer der vorhergehenden Ausführungsformen, wobei der Zweikomponentenklebstoff einen Anteil von 70 bis 97 Gew.-%, bevorzugt von 75 bis 95 Gew.-%, mehr bevorzugt von 80 bis 90 Gew.-% an isocyanatreaktive-Komponente aufweist, bezogen auf das Gesamtgewicht des nicht flüchtigen Anteils der Isocyanat-Komponente und der isocyanatreaktiven-Komponenten des flüssigen Zweikomponentenklebstoffs.

Nach einer siebten Ausführungsform betrifft die Erfindung ein Verfahren nach einer der vorhergehenden Ausführungsformen, wobei die isocyanatreaktive-Komponente ein mittleres Molekulargewicht Mw in einem Bereich von 5.000 bis 100.000 g/mol, bevorzugt von 6.000 bis 80.000 g/mol und mehr bevorzugt von 8.000 bis 70.000 g/mol g/mol, aufweist und/oder die Isocyanat-Komponente ein mittleres Molekulargewicht Mn von < 1000 g/mol, aufweist.

Nach einer achten Ausführungsform betrifft die Erfindung ein Verfahren nach einer der vorstehenden Ausführungsformen, wobei die Isocyanat-Komponente des Zweikomponentenklebstoffs ausgewählt ist aus der Gruppe bestehend aus:
- monomere Polyisocyanate, insbesondere Hexamethylen-1,6-diisocyanat, Pentamethylen-1,5-diisocyanat, 1,4-Butandiisocyanat, Isophorondiisocyanat, Toluol-2,4-diisocyanat, Toluol-2,6-diisocyanat, Diphenylmethan-2,2'-diisocyanat, Diphenylmethan-2,4'-diisocyanat, Diphenylmethan-4,4'-diisocyanat oder Mischungen aus mindestens zwei davon;
- oligomere Polyisocyanate, welche aus mindestens zwei monomeren Polyisocyanaten hergestellt werden;
- Isocyanat-terminierte Präpolymere, welche durch Umsetzung von monomeren und/oder oligomeren Polyisocyanaten und Isocyanat-reaktiven Verbindungen mit > 1 Isocyanat-reaktiven Gruppen pro Moleküle hergestellt werden, wobei die Isocyanat-reaktive Verbindung bevorzugt Polyole, weiter bevorzugt hydroxylgruppenhaltige Polyoxymethylen-Polyoxyalkylen-Copolymere, Polyacrylate, Polycarbonate, Polyester, Polyurethane und/oder Polyether;
- oder Mischungen aus mindestens zwei der vorgenannten Verbindungen.

Nach einer neunten Ausführungsform betrifft die Erfindung ein Verfahren nach einer der vorstehenden Ausführungsformen, wobei der Zweikomponentenklebstoff zudem organische Lösungsmittel, Katalysatoren, Füllstoffe, Prozesshilfsmittel, Haftvermittler, insbesondere Silane, Stabilisatoren, insbesondere Antioxidantien oder Mischungen aus mindestens zwei davon enthält.

Nach einer zehnten Ausführungsform betrifft die Erfindung ein Verfahren nach einer der vorstehenden Ausführungsformen, wobei die Isocyanat-Komponente einen Gehalt an Isocyanatgruppen in einem Bereich von 5 bis 35 Gew.-%, bevorzugt von 8 und 25 Gew.-%, bezogen auf das Gesamtgewicht der Isocyanat-Komponente aufweist.

Nach einer elften Ausführungsform betrifft die Erfindung ein Verfahren nach einer der vorstehenden Ausführungsformen, wobei der Gehalt an Isocyanat-Gruppen in einem Bereich von 0,5 bis 2,5 Gew.-%, bezogen auf die Gesamtmenge an Isocyanat-Komponente und Isocyanat-reaktiver Komponente liegt.

Nach einer zwölften Ausführungsform betrifft die Erfindung ein Verfahren nach einer der vorstehenden Ausführungsformen, wobei das Polyolefin der Monomaterial-Schichten aus der Gruppe ausgewählt ist, umfassend oder bestehend aus Polyethylen, Polypropylen oder Mischungen aus mindestens zwei davon.

Nach einer dreizehnten Ausführungsform betrifft die Erfindung ein Verfahren nach einer der vorstehenden Ausführungsformen, wobei der Anteil des Polyolefins von 95,0 bis 99,3 Gew.-% und/oder der Anteil des Zweikomponentenklebstoffs von 0,70 bis 10,0 Gew.-%, bevorzugt 1,0 bis 5,0 Gew.-% beträgt, jeweils bezogen auf das Gesamtgewicht des Monomaterial-Mehrschichtsystems.

Nach einer vierzehnten Ausführungsform betrifft die Erfindung ein Monomaterial-Mehrschichtsystem, insbesondere ein recyclefähiges Monomaterial-Mehrschichtsystem, erhalten oder erhältlich nach einem Verfahren gemäß einer der vorhergehenden Ausführungsformen.

Nach einer fünfzehnten Ausführungsform betrifft die Erfindung die Verwendung eines Monomaterial-Mehrschichtsystems gemäß Ausführungsform 14 als, vorzugsweise recyclefähiges, Verpackungsmaterial, insbesondere Verpackungsmaterial für Lebensmittel. Nach einer sechzehnten Ausführungsform betrifft die Erfindung die Verwendung eines Zweikomponentenklebstoffs definiert wie in einer der Ausführungsformen 1 bis 14 in Monomaterial-Mehrschichtsystemen, insbesondere zur Verbesserung der Recyclingfähigkeit von Monomaterial-Mehrschichtsystemen, wobei das Material der Monomaterial-Schichten Polyolefine mit einem Anteil von 80,0 bis 99,3 Gew.-% umfasst, bezogen auf das Gesamtgewicht des Monomaterial-Mehrschichtsystems.

Nach einer siebzehnten Ausführungsform betrifft die Erfindung ein Verfahren zur Gewinnung eines Rezyklats aus Monomaterial-Mehrschichtsystem-haltigem Abfall, welcher ein Monomaterial-Mehrschichtsystem gemäß Ausführungsform 14 enthält, wobei die Gewinnung die folgenden Schritte umfasst:
i. Zerkleinerung, Waschen und optional Sterilisation des Monomaterial-Mehrschichtsystem-haltigen Abfalls unter Erhalt einer Materialmischung;
ii. Optional Sortierung der Materialmischung;
iii. Optional Mischen der Materialmischung mit weiteren Bestandteilen, insbesondere mit Polyolefinen;
iv. Weitere Aufarbeitung, insbesondere Schmelzen und Extrudieren, der Materialmischung unter Erhalt des Rezyklats.

Nach einer achtzehnten Ausführungsform betrifft die Erfindung Formteile erhalten oder erhältlich durch die Verarbeitung eines gemäß dem Verfahren nach der vorhergehenden Ausführungsform erhaltenen oder erhältlichen Rezyklats.

### Beispiele

Die vorliegende Erfindung wird im Folgenden anhand der nachfolgenden Beispiele näher erläutert.

### Messmethoden

- Die Hydroxylzahl (oder OH-Zahl) einer Verbindung wird, wenn nicht anders angegeben, nach DIN EN ISO 4629-2-2016-12 ermittelt. N-Methylpyrrolidon wird in Kapitel 5.1 und 5.5 der Norm jeweils durch Pyridin ersetzt, als Lösemittel für den Katalysator wird in Kapitel 5.2 der Norm Ethanol statt Methanol verwendet.
- Die Säurezahl (oder AV-Zahl) einer Verbindung wird nach ISO 2114:2000 bestimmt.
- Sofern nicht anders beschrieben, werden das numerische mittlere Molekulargewicht Mn und das mittlere Gewicht-Molekulargewicht Mw nach DIN EN ISO 13885-1:2021 (ISO 13885-1:2020) "Gelpermeationschromatographie, Teil I - Tetrahydrofuran als Elutionsmittel" bestimmt.
- Der nicht-flüchtige Anteil, im Folgenden auch Feststoffgehalt genannt, wurde anhand der Norm DIN EN ISO 3251 (2019-09), Einwaage 1 g, Trocknung für 1 h bei 125 °C, ermittelt.

### Materialien:

Es wurden die folgenden Rohstoffe und Materialien eingesetzt:

### Rohstoff zur Herstellung von Monomaterial-Schichten

- BorShape^{®} FX1001: Alpha-Olefin Terpolymer Polyethylen (Pellets)

### Monomaterial-Schichten

- Folie aus Cast-Polypropylen (CPP): Cast-Polypropylen Folie ohne Prägung PB81AB mit 50 µm Dicke; Hersteller: Profol GmbH, Materialnummer 15357005

### Bestandteile der isocyanatreaktiven-Komponenten

- Ethylenglykol (Reinheit > 97,5 %), Brenntag GmbH, Deutschland
- Diethylenglykol (Reinheit > 99 %), Brenntag GmbH, Deutschland
- 2,2-Dimethylpropan-1,3-diol (Neopentylglykol; Reinheit 99-100 %), BASF SE, Deutschland
- Hexandiol (Reinheit > 96 %), BASF SE, Deutschland
- 1,2-Proppylenglykol (Reinheit > 99 %), Oleon GmbH, Deutschland,
- Trimethylol-Propan (Reinheit > 90 %), Lanxess AG, Deutschland,
- Adipinsäure (Reinheit 99,8 %), BASF SE, Deutschland,
- Sebacinsäure (Reinheit > 98%), Arkema GmbH, Deutschland,
- Isophthalsäure (Reinheit 95-100 %), Lotte Chemical, Südkorea,
- Terephthalsäure (Reinheit > 99 %), BP AG, Großbritannien,
- Titan (IV)isopropoxid), Sigma Aldrich, Deutschland,
- Hexamethylendiisocyanat (Reinheit >99,5), Covestro Deutschland GmbH, Deutschland
- Ethylacetat (Reinheit >99,8), Ineos Köln, Deutschland

### Synthese der Polyesterpolyole als isocyanatreaktive-Komponente in Lösungsmittel

▪ Polyester Synthese 1 (PES 1)

Ein 4-Liter-Glasreaktor, der mit einem mechanischen Rührer, einem Thermoelement und einer Destillationsanlage mit einer Vigreux-Säule ausgestattet war, wurde mit Neopentylglykol (422,0 g), Ethylenglykol (360,0 g), Trimethylolpropan (6,6 g), Isophthalsäure (520,0 g), Terephthalsäure (520,0 g) und Adipinsäure (545,0 g) beschickt. Die Temperatur wurde unter einer N₂-Atmosphäre allmählich, nicht schneller als 10°C pro 10 Minuten, auf 250 °C angehoben. Die Temperatur wurde bei 250° C gehalten, bis die Säurezahl von weniger als 20 mg KOH/g im Harz erreicht war. Danach wurde die Vigreux-Kolonne ausgebaut und durch eine Standard-Destillationsanlage ersetzt. Ein Titan-Isopropoxyd-Katalysator (0,2 g) wurde hinzugefügt und schrittweise Vakuum (< 30 mBar)angelegt. Der Reaktionsverlauf wurde durch Probenentnahme und Messung der Säurezahl (SZ) und der Hydroxylzahl (OHZ) überwacht. Die Reaktion wurde fortgesetzt, bis SZ unter 4 mgKOH/g erreicht wurde. Bei Bedarf erforderlich, wurden Glykolkorrekturen durch Zugabe von Neopentylglykol und/oder Säurekorrekturen durch Zugabe von Isophthalsäure durchgeführt. Das Polyester wurde ausgetragen und auf Raumtemperatur abgekühlt. Im 2L-Glasreaktor wurden 400 g der erhaltenen Harze in 600 g Ethylacetat bei 60 °C unter N₂-Strömung und konstantem Rühren gelöst. Das endgültige Gemisch hatte eine SZ = 3,0 mgKOH/g bezogen auf den Feststoffgehalt, OHZ = 2,5 mgKOH/g bezogen auf den Feststoffgehalt, Mn = 10300 g/mol, Mw = 64500 g/mol, mittlere OH-Funktionalität 0,5, Feststoffgehalt = 40,1%.

### ▪ Polyester Synthese 2 (PES 2)

Ein 4-Liter-Glasreaktor, der mit einem mechanischen Rührer, einem Thermoelement und einer Destillationsanlage mit einer Vigreux-Säule ausgestattet war, wurde mit Ethylendiol (100,0 g), Diethylenglykol (500,0 g), 1,2-Propylendiol (200,0 g), Trimethylolpropan (15,0 g), Isophthalsäure (580,0 g), Terephthalsäure (580,0 g) und Sebacinsäure (310,0 g) beschickt. Die Temperatur wurde unter einer N₂-Atmosphäre allmählich, nicht schneller als 10°C pro 10 Minuten, auf 250 °C angehoben . Die Temperatur wurde bei 250° C gehalten, bis die Säurezahl von weniger als 20 mg KOH/g im Harz erreicht war. Danach wurde die Vigreux-Kolonne ausgebaut und durch eine Standard-Destillationsanlage ersetzt. Ein Titan-Isopropoxyd-Katalysator (0,2 g) wurde hinzugefügt und schrittweise Vakuum (< 30 mBar) angelegt. Der Reaktionsverlauf wurde durch Probenentnahme und Messung der Säurezahl (SZ) und der Hydroxylzahl (OHZ) überwacht. Die Reaktion wurde dann fortgesetzt, bis die SZ unter 2 mgKOH/g erreicht wurde. Falls erforderlich, wurden Glykolkorrekturen durch Zugabe von Diethylenglykol und/oder Säurekorrekturen durch Zugabe von Isophthalsäure durchgeführt. Das Polyester wurde auf 80 °C abgekühlt und dem Harz Ethylacetat (860,0 g) zugesetzt. Das endgültige Gemisch hatte eine SZ von 1,5 mgKOH/g bezogen auf den Feststoffgehalt, OHZ = 18,0 mgKOH / g bezogen auf den Feststoffgehalt, Mn = 6180 g/mol, Mw = 17564 g/mol, mittlere OH-Funktionalität 2,0, Feststoffgehalt = 70,2 %.

### ▪ Polyester Synthese 3 (PES 3) (Polyester mit Urethangruppengehalt > 4 Gew.-%)

Ein 4-Liter-Glasreaktor, der mit einem mechanischen Rührwerk, einem Thermoelement und einer Destillationsanlage ausgestattet war, die mit einer Vigreux-Säule ausgestattet war, wurde mit Neopentylglykol (500,0 g), Hexandiol (560,0 g) und Adipinsäure (1240,0 g) beschickt. Die Temperatur wurde unter einer N₂-Atmosphäre allmählich, nicht schneller als 10°C pro 10 Minuten, auf 230 °C angehoben. Die Temperatur wurde bei 230° C gehalten, bis eine Säurezahl (SZ) von weniger als 20 mg KOH/g im Harz erreicht wurde. Danach wurde die Vigreux-Kolonne ausgebaut und durch eine Standard-Destillationsanlage ersetzt. Ein Titan-Isopropoxyd-Katalysator (0,2 g) wurde hinzugefügt und schrittweise mit Vakuum (< 30 mBar) angelegt. Der Reaktionsverlauf wurde durch Probenentnahme und Messung der Säurezahl (SZ) und der Hydroxylzahl (OHZ) überwacht. Die Reaktion wurde dann fortgesetzt, bis die SZ unter 0,5 mgKOH/g erreicht wurde. Das Polyester wurde ausgetragen und auf Raumtemperatur abgekühlt. Falls erforderlich, wurden Glykolkorrekturen durch Zugabe von Neopentylglykol und/oder Säurekorrekturen durch Zugabe von Adipinsäure durchgeführt.

Im 2L-Glasreaktor wurden 500 g der gewonnenen Harze in 500 g Ethylacetat bei 80 °C unter N₂-Strömung und konstantem Rühren gelöst. Dann wurde Desmodur^{®} H (40,0 g) hinzu gegeben. Die Reaktion wurde 4 Stunden bei 80 °C durchgeführt. Danach wurde der Feststoffgehalt mit Ethylacetat auf 50% eingestellt. Das endgültige Gemisch hatte eine SZ von 0,1 mgKOH/g bezogen auf den Feststoffgehalt, OHZ = 7,3 mgKOH/g bezogen auf den Feststoffgehalt, Mn = 9576 g/mol, Mw = 24752 g/mol, mittlere OH-Funktionalität 1,2, Feststoffgehalt = 50,1 %.

### Isocyanat-Komponente

- Desmodur^{®} H: Hexamethylendiisocyanat (HDI), Covestro-Deutschland GmbH, Deutschland
- Desmodur^{®} ultra N 3300: Desmodur^{®} ultra N 3300 ist ein aliphatisches Polyisocyanat (HDI-Trimerisat) mit einem geringen Restmonomergehalt von < 0,1%. Der Feststoffgehalt, bzw. der nicht-flüchtige Anteil, liegt bei 100%. Der NCO-Gehalt liegt bei ca. 21,8 Gew.-%, Covestro-Deutschland GmbH, Deutschland
- Desmodur^{®} ultra L 75: Desmodur^{®} ultra L 75 ist ein TDI-TMP Addukt mit einem geringen Restmonomergehalt von < 0,1%. Der Feststoffgehalt, bzw. der nicht-flüchtige Anteil, liegt bei 75% in Ethylacetat. Der NCO-Gehalt liegt bei ca. 13,3 Gew.-%, Covestro-Deutschland GmbH, Deutschland

### Additive

- Rewomid^{®} DC 212 S ist ein nichtionisches Tensid, Evonik Industries AG, Deutschland

### Herstellung von Zweikomponentenklebstoffen

Die Rohstoffe, die zur Herstellung des Zweikomponentenklebstoffes eingesetzt wurden, wurden vor der Formulierung des Klebstoffes für 3h bei 60°C erwärmt. In einem Becherglas wurde die Isocyanat-reaktive Komponente und die Isocyanat-Komponente gegeben und vermischt. Das Mischen erfolgte mit einem Holzspatel, bis eine homogene Mischung erreicht wurde, was ca. 2 Minuten dauerte.

Erfinderische Beispiele 1 bis 7 und nicht erfinderische Beispiele 8 und 9 zur Herstellung eines Zweikomponentenklebstoffes können der folgenden Tabelle 1 entnommen werden.

**Tabelle 1: Herstellung Zweikomponenten-Polyurethanklebstoffe**

| Beispiel | 1 | 2 | 3 | 4 | 5 | 6 | 7 | 8 (V) | 9 (V) |
|---|---|---|---|---|---|---|---|---|---|
| Isocyanat-Komponente - Einwaage in [g] | | | | | | | | | |
| Desmodur^{®} ultra N 3300 | 3 | - | 5,4 | - | 3,1 | - | 3 | 3 | - |
| Desmodur^{®} ultra L 75 | - | 3 | - | 8,8 | - | 5 | - | - | 4,9 |

| isocyanatreaktive-Komponente - Einwaage in [g] | | | | | | | | | |
|---|---|---|---|---|---|---|---|---|---|
| PES 1 | 10 0 | 10 0 | - | - | 50 | 50 | 100 | - | - |
| PES 2 | - | - | 10 0 | 100 | 50 | 50 | - | - | - |
| PES 3 | | | | | | | | 100 | 100 |

| Additiv - Einwaage in [g] | | | | | | | | | |
|---|---|---|---|---|---|---|---|---|---|
| Rewomid^{®} DC 212 S | - | - | - | - | - | - | 3 | - | - |
| | | | | | | | | | |
| Gehalt an isocyanat-reaktiver Komponente in Gew.-% im Klebstofffilm | 93 | 95 | 93 | 91 | 95 | 94 | 88 | 81 | 85 |
| Urethangruppengehal t im Polyesterpolyol | 0 | 0 | 0 | 0 | 0 | 0 | 0 | 5,1 | 5,1 |

Die erfindungsgemäßen Beispiele 1 bis 7 weisen analytisch, sowie rechnerisch keinen Urethangruppengehalt auf, da der Polyester durch eine Polykondensationsreaktion hergestellt worden ist, im Vergleich zu den Vergleichsbeispielen 8 und 9, in denen ein Polyesterurethan mit einem Urethangruppengehalt von rechnerisch 5,1% zur Anwendung kommt. Wie der Fachmann weiß, kann der Urethangruppengehalt des Zweikomponenten-Polyurethanklebstoffe auch mittels IR-Spektroskopie ermittelt werden.

### Herstellung der ausgehärteten Zweikomponentenklebstoffe

Die Aushärtung der Polyurethanklebstoffe aus Beispiel 1 bis 9 erfolgte in Teflon-Schalen (Durchmesser: 15cm / Tiefe: 0,5 cm ). Durch Lagerung bei 23°C und 50% relativer Luftfeuchte für 7 Tage [d] und anschließender Nachlagerung für 48 Stunden [h] bei 60°C wurden die Klebstofffilme ausgehärtet. Die Dicke der jeweiligen Klebstofffilme betrug nach der Trocknung ca. 100 µm, gemessen mit einem Schichtdickenmessgerät (BAL Digimatic Messuhr ID-C112B).

### Herstellung von Monomaterial-Mehrschichtsystemen

Für die Herstellung eines Monomaterial-Mehrschichtsystemen wurde mit einem Hand-Laminiergerät, mit der Bezeichnung: K Control Coater Modell 623 / 624 (K101 / K202), eine Lamination von Propylenfolien durchgeführt zwischen die der jeweils zu testende Klebstoff eingebracht wurde. Hierzu wurde in dem Hand-Laminiergerät eine erste Folie eingespannt (Cast-Polypropylenfolie: Cast-Polypropylen Folie mit 50 µm Dicke; Hersteller: Profol GmbH). Diese Folie sowie alle weiteren Folien des Laminats lagen in DIN A4 Größe vor und wurden vor der Beschichtung mit dem Klebstoff mit Corona behandelt, sodass die Oberflächenspannung > 50 dyn betrug. Auf die erste eingespannte Folie wurde anschließend der Zweikomponentenklebstoff am oberen Rand, in Form einer Raupe aufgetragen. Danach wurde der Klebstoff mit Hilfe eines Rakels gleichmäßig auf der Folie verteilt. Der Zweikomponentenklebstoff wurde mit einer Wärmepistole mit der Bezeichnung Steinel HL2002LE auf Stufe 100°C erwärmt, so dass sich eine Oberflächentemperatur auf der Folie von 60 °C ergab. Im nächsten Schritt wurde auf die beschichtete erste Folie eine zweite, identische Folie kaschiert. Der so erhaltene Verbund wurde anschließend bei Raumtemperatur für 24 Stunden und für 7 Tage gelagert. Nach der Lagerung und Abkühlung auf Raumtemperatur erfolgte die Bestimmung der Verbundfestigkeit im 180°-Schälversuch.

### Bestimmung der Verbundfestigkeit im 180°-Schälversuch

Zur Bestimmung der Schälfestigkeit wurden die Verbundfolien, wie unter dem vorherigen Punkt beschrieben hergestellt, in 15 mm breite Streifen zerschnitten. Anschließend wurden die Streifen bei 23°C in einer Universalprüfmaschine für Schälfestigkeiten der Firma Zwick (Typ 5kN Allround Table-top BT2-FA005TH.A50.002) mit einer Geschwindigkeit von 100 mm/min bei einem Winkel von 2 × 90° (180°) abgezogen und die dabei erforderliche Kraft in Newton gemessen. Die in Tabelle 2 angegebenen Werte sind die Mittelwerte aus fünf Einzelmessungen. Eine ermittelte Verbundfestigkeit kann der folgenden Tabelle 2 entnommen werden.

**Tabelle 2: Verbundfestigkeit**

| Beispiel | Auftragsgewicht [g/m²] | Verbundfestigkeit nach 24h [N/15mm] | Verbundfestigkeit nach 7d [N/15mm] |
|---|---|---|---|
| 1 | 3,5 | 6,0 | 5,7 |
| 2 | 3,5 | 6,5 | 5,9 |
| 3 | 4,0 | 2,3 | 5,9 |
| 4 | 4,0 | 1,8 | 4,5 |
| 5 | 3,9 | 4,3 | 7,1 |
| 6 | 3,8 | 1,7 | 6,7 |
| 7 | 4,0 | 4,8 | 5,3 |
| 8 (V) | 3,6 | 0,1 | 2,5 |
| 9 (V) | 3,6 | 0,1 | 5,2 |

Bei den Beispielen 8 und 9 handelt es sich um Vergleichsbeispiele (V). Die Beispiele 1 bis 7 sind erfindungsgemäße Beispiele.

Eine ausreichende Verbundfestigkeit ist gegeben, wenn nach 24 Stunden Lagerung bei Raumtemperatur im Schälversuch ein Wert von mindestens 1,5 N/15mm erreicht wird.

### Verfahren zur Gewinnung eines Rezyklats aus Rohstoffen zur Herstellung von Monomaterial-Mehrschichtsystemen

Die ausgehärteten Zweikomponenten-Klebstofffilme, wie unter dem vorletzten Verfahren zur "Herstellung der ausgehärteten Zweikomponentenklebstoffe" beschrieben, hergestellt, wurden mit einer Schere auf Stücke mit einer Größe von 0,5 cm × 0,5 cm zerschnitten. Im Extrusionsprozess wurden 0,75 g der jeweiligen Zweikomponentenklebstoffe aus Beispiel 4 bis 9 mit 14,25 g PE-Granulat BorShape^{®} FX1001 gemischt und extrudiert. Die Extrusion erfolgte in einem Laborextruder (Mikro Compounder/ DSM Xplore/ Model 2005) bei 200 °C und einer Verarbeitungszeit von 6 Min. Aus der Extrusion resultierte ein homogener Polymerstrang.

### Allgemeine Vorschrift zur Bewertung der Rezyklat-Qualität

Ein Teil des extrudierten Polymerstrangs wird mit einer hydraulischen Presse (Handhebelpresse/ Vogt Maschinenbau GmbH/ LaboPress P150H) bei 200 °C, bei einer Verarbeitungszeit von 2 Min und einem Druck von 30 kN zu dünnen Polymerfilmen mit einer Dicke von 200 µm und einem Durchmesser von 5 cm verpresst. Die so erhaltenen dünnen Polymerfilme werden nach Abkühlung zur Prüfung auf Homogenität verwendet. Analog kann ein Rezyklat direkt aus einem Monomaterial-Schichtsystem bzw. Monomaterial-Schichtsystem-haltigem Abfall erzeugt werden. In diesem Fall werden der Klebstoff und das PE-Granulat durch das Monomaterial-Schichtsystem (bzw. den Monomaterial-Schichtsystem-haltigen Abfall) ersetzt.

Die Prüfkörper bzw. dünnen Polymerfilme werden unter ein Nikon Ni-E Lichtmikroskop mit motorisiertem Tisch gelegt, und es werden optische Mikrofotografien der Probenoberfläche im transmittierenden Licht aufgenommen. Eine vierfache Vergrößerung des verwendeten Objektivs wird eingesetzt. Um statistisch zuverlässige Daten zu erhalten, wird eine Gesamtfläche von 11,84 × 10,47 cm² der Probenoberfläche mit Hilfe des automatischen Mapping-Moduls untersucht, das 5 × 4 Bilder zusammenfügt. Nach der Aufnahme der Bilder wird eine automatische Bildanalyse mit der Nikon NIS Elements BR Version 5.4 Software durchgeführt. Defekte in der Probe werden identifiziert, indem Bereiche in der Probe anhand eines Schwellenwerts für die Intensität bezogen auf den Mittelwert der Intensität der Probe ermittelt werden. Für Defekte mit einer geringeren optischen Dichte als die der Matrix wird ein Schwellenwert von 150 angewendet. Für Defekte mit einer höheren optischen Dichte als die des Films wird ein Schwellenwert von 120 angewandt. Nach der Trennung wird eine weitere Größenbeschränkung auf die Ergebnisse angewendet, wobei Merkmale mit einem äquivalenten Durchmesser von weniger als 20 µm und einer Rundheit (Circularity) von weniger als 0,1 ausgeschlossen werden, um Artefakte zu entfernen. Die gefilterten Ergebnisse werden dann berechnet, und die Anzahl der Defekte, sowie der Flächenanteil der Defekte werden angegeben.

**Tabelle 3: Bewertung der Rezyklat-Qualität**

| Beispiel | Anzahl von Defekten [-] | Fläche der Defekte [%], bezogen auf Gesamtfläche |
|---|---|---|
| Beispiel 10 (V) PE-Granulat (Null-Wert) | 596 | 0,5 |
| Beispiel 11 Klebstoff aus Bsp. 1 | 1703 | 3,1 |
| Beispiel 12 Klebstoff aus Bsp. 2 | 1217 | 2,5 |
| Beispiel 13 Klebstoff aus Bsp. 3 | 1723 | 3,0 |
| Beispiel 14 Klebstoff aus Bsp. 4 | 1112 | 2,4 |
| Beispiel 15 Klebstoff aus Bsp. 5 | 1637 | 2,9 |
| Beispiel 16 Klebstoff aus Bsp. 6 | 1389 | 2,3 |
| Beispiel 17 Klebstoff aus Bsp. 7 | 902 | 1,8 |
| Beispiel 18 (V) Klebstoff aus Bsp. 8 | 6503 | 8,7 |
| Beispiel 19 (V) Klebstoff aus Bsp. 9 | 7890 | 9,3 |

Bei Beispielen 18 und 19 handelt es sich um Vergleichsbeispiele (V), Beispiel 10 ist nicht recycliertes Material als Basis und Beispiele 11 bis 17 sind erfindungsgemäße Rezyklate aus den jeweils genannten Beispielen 1 bis 7.

Wie sich anhand der Ergebnisse in Tabelle 3 zeigt, weisen die erfindungsgemäßen Rezyklate eine deutlich höhere Homogenität auf, ausgedrückt durch die gegenüber den Vergleichsbeispielen 18 und 19 deutlich geringere Anzahl und Gesamtfläche der Fehlstellen.

## Patentansprüche

1. Verfahren zur Herstellung eines Monomaterial-Mehrschichtsystems, insbesondere eines recyclefähigen Monomaterial-Mehrschichtsystems, wobei das Verfahren die folgenden Schritte umfasst oder daraus besteht:
I) Bereitstellen von wenigstens zwei Monomaterial-Schichten;
II) Auftragen eines Zweikomponentenklebstoffs mittelbar oder unmittelbar auf wenigstens eine der beiden bereitgestellten Monomaterial-Schichten, wobei der Zweikomponentenklebstoff mindestens eine isocyanatreaktive-Komponente sowie mindestens eine Isocyanat-Komponente umfasst;
III) Verbinden der Monomaterial-Schichten mittels des Zweikomponentenklebstoffs sowie Aushärten des Zweikomponentenklebstoffs unter Erhalt des Monomaterial-Mehrschichtsystems;
**dadurch gekennzeichnet, dass**
das Material der Monomaterial-Schichten Polyolefine umfasst und der Anteil des Polyolefins von 80,0 bis 99,3 Gew.-% beträgt, bezogen auf das Gesamtgewicht des Monomaterial-Mehrschichtsystems,
der Anteil des Zweikomponentenklebstoffs 0,7 bis 20,0 Gew.-% beträgt, bezogen auf das Gesamtgewicht des Monomaterial-Mehrschichtsystems,
die isocyanatreaktive-Komponente ein Polyesterpolyol mit einer Hydroxyzahl (OHZ) von ≤ 30 mgKOH/g aufweist,
wobei die isocyanatreaktive-Komponente Urethangruppen in einem Bereich von 0 bis 4 Gew.-%, bezogen auf das Gesamtgewicht des nicht-flüchtigen Anteils der isocyanatreaktiven-Komponenten aufweist.

2. Das Verfahren nach Anspruch 1, **dadurch gekennzeichnet, dass** die isocyanatreaktive-Komponente das Polyesterpolyol zu mindestens 50 Gew.-%, bezogen auf die Gesamtmasse aller isocyanatreaktive Gruppenaufweisenden Bestandteile der isocyanatreaktiven-Komponenten aufweist.

3. Das Verfahren nach Anspruch 1 oder 2, **dadurch gekennzeichnet, dass** die isocyanatreaktive-Komponente des Zweikomponentenklebstoffs isocyanatreaktive Gruppenaufweist, bei denen es sich im Wesentlichen um Hydroxyl-Gruppen handelt.

4. Das Verfahren nach einem der vorherigen Ansprüche, **dadurch gekennzeichnet, dass** die isocyanatreaktive-Komponente Polyester aufweist, die als Aufbaukomponente mindestens eine Dicarbonsäure, ausgewählt aus der Gruppe bestehend aus Adipinsäure, Terephthalsäure, Sebacinsäure, Isophthalsäure oder einer Mischung aus mindestens zwei hiervon aufweist.

5. Das Verfahren nach einem der vorherigen Ansprüche, **dadurch gekennzeichnet, dass** der Zweikomponentenklebstoff einen Anteil von 70 bis 97 Gew.-% an isocyanatreaktive-Komponente aufweist, bezogen auf das Gesamtgewicht des nicht flüchtigen Anteils der Isocyanat-Komponente und der isocyanatreaktiven-Komponenten des flüssigen Zweikomponentenklebstoffs.

6. Das Verfahren nach einem der vorherigen Ansprüche, **dadurch gekennzeichnet, dass** die isocyanatreaktive-Komponente ein mittleres Molekulargewicht Mw in einem Bereich von 5.000 bis 100.000 g/mol, bevorzugt von 6.000 bis 80.000 g/mol und mehr bevorzugt von 8.000 bis 70.000 g/mol g/mol, aufweist und/oder die Isocyanat-Komponente ein mittleres Molekulargewicht Mn von < 1000 g/mol, aufweist.

7. Das Verfahren nach einem der vorherigen Ansprüche, **dadurch gekennzeichnet, dass** die Isocyanat-Komponente des Zweikomponentenklebstoffs ausgewählt ist aus der Gruppe bestehend aus:
• monomere Polyisocyanate, insbesondere Hexamethylen-1,6-diisocyanat, Pentamethylen-1,5-diisocyanat, 1,4-Butandiisocyanat, Isophorondiisocyanat, Toluol-2,4-diisocyanat, Toluol-2,6-diisocyanat, Diphenylmethan-2,2'-diisocyanat, Diphenylmethan-2,4'-diisocyanat, Diphenylmethan-4,4'-diisocyanat oder Mischungen aus mindestens zwei davon;
• oligomere Polyisocyanate, welche aus mindestens zwei monomeren Polyisocyanaten hergestellt werden;
• Isocyanat-terminierte Präpolymere, welche durch Umsetzung von monomeren und/oder oligomeren Polyisocyanaten und Isocyanat-reaktiven Verbindungen mit > 1 Isocyanat-reaktiven Gruppen pro Moleküle hergestellt werden, wobei die Isocyanat-reaktive Verbindung bevorzugt Polyole, Polyacrylate, Polycarbonate, Polyester, Polyurethane und/oder Polyether sind;
• oder Mischungen aus mindestens zwei der vorgenannten Verbindungen.

8. Verfahren nach einem der vorherigen Ansprüche, **dadurch gekennzeichnet, dass** die Isocyanat-Komponente einen Gehalt an Isocyanatgruppen in einem Bereich von 5 bis 35 Gew.-%, bevorzugt von 8 und 25 Gew.-%, bezogen auf das Gesamtgewicht der Isocyanat-Komponente aufweist.

9. Das Verfahren nach einem der vorherigen Ansprüche, **dadurch gekennzeichnet, dass** der Gehalt an Isocyanat-Gruppen in einem Bereich von 0,5 bis 2,5 Gew.-%, bezogen auf die Gesamtmenge an Isocyanat-Komponente und Isocyanat-reaktiver Komponente liegt.

10. Das Verfahren nach einem der vorherigen Ansprüche, **dadurch gekennzeichnet, dass** das Polyolefin der Monomaterial-Schichten aus der Gruppe ausgewählt ist, umfassend oder bestehend aus Polyethylen, Polypropylen oder Mischungen davon.

11. Das Verfahren nach einem der vorstehenden Ansprüche, **dadurch gekennzeichnet, dass** der Anteil des Polyolefins von 95,0 bis 99,3 Gew.-% und/oder der Anteil des Zweikomponentenklebstoffs von 0,70 bis 10,0 Gew.-%, bevorzugt 1,0 bis 5,0 Gew.-% beträgt, jeweils bezogen auf das Gesamtgewicht des Monomaterial-Mehrschichtsystems.

12. Ein Monomaterial-Mehrschichtsystem, insbesondere ein recyclefähiges Monomaterial-Mehrschichtsystem, erhalten oder erhältlich nach einem Verfahren gemäß einem der Ansprüche 1 bis 11.

13. Verwendung eines Monomaterial-Mehrschichtsystems gemäß Anspruch 12 als, vorzugsweise recyclefähiges, Verpackungsmaterial, insbesondere Verpackungsmaterial für Lebensmittel.

14. Verwendung eines Zweikomponentenklebstoffs definiert wie in einem der Ansprüche 1 bis 11 in Monomaterial-Mehrschichtsystemen, insbesondere zur Verbesserung der Recyclingfähigkeit von Monomaterial-Mehrschichtsystemen, wobei das Material der Monomaterial-Schichten Polyolefine mit einem Anteil von 80,0 bis 99,3 Gew.-% umfasst, bezogen auf das Gesamtgewicht des Monomaterial-Mehrschichtsystems.

15. Ein Verfahren zur Gewinnung eines Rezyklats aus Monomaterial-Mehrschichtsystem-haltigem Abfall, welcher ein Monomaterial-Mehrschichtsystem gemäß Anspruch 12 enthält, wobei die Gewinnung die folgenden Schritte umfasst:
i. Zerkleinerung, Waschen und optional Sterilisation des Monomaterial-Mehrschichtsystem-haltigen Abfalls unter Erhalt einer Materialmischung;
ii. Optional Sortierung der Materialmischung;
iii. Optional Mischen der Materialmischung mit weiteren Bestandteilen, insbesondere mit Polyolefinen;
iv. Weitere Aufarbeitung, insbesondere Schmelzen und Extrudieren, der Materialmischung unter Erhalt des Rezyklats.

16. Ein Formteil erhalten oder erhältlich durch die Verarbeitung eines gemäß dem Verfahren nach Anspruch 15 erhaltenen oder erhältlichen Rezyklats.
